(19) Europäisches Patentamt
European Patent Office
Office européen des brevets

(11) **EP 3 690 488 B1**

(12) **EUROPÄISCHE PATENTSCHRIFT**

(45) Veröffentlichungstag und Bekanntmachung des Hinweises auf die Patenterteilung:
**14.12.2022 Patentblatt 2022/50**

(21) Anmeldenummer: **20166362.2**

(22) Anmeldetag: **25.03.2014**

(51) Internationale Patentklassifikation (IPC):
**G01S 17/10** (2020.01)   **G01S 17/46** (2006.01)
**G01N 21/17** (2006.01)   **G01S 7/487** (2006.01)
**G01S 7/497** (2006.01)

(52) Gemeinsame Patentklassifikation (CPC):
**G01S 7/487; G01S 7/497; G01S 17/10; G01S 17/46**

(54) **SENSORSYSTEM ZUR ERKENNUNG MINDESTENS EINES OBJEKTS IN EINER ÜBERTRAGUNGSSTRECKE**

SENSOR SYSTEM FOR IDENTIFYING AT LEAST ONE OBJECT IN A TRANSMISSION LINE

SYSTÈME DE CAPTEUR PERMETTANT DE DÉTECTER AU MOINS UN OBJET DANS UN TRAJET DE TRANSMISSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**05.08.2020 Patentblatt 2020/32**

(62) Dokumentnummer(n) der früheren Anmeldung(en) nach Art. 76 EPÜ:
**14161556.7 / 2 924 459**

(73) Patentinhaber: **Elmos Semiconductor SE
44227 Dortmund (DE)**

(72) Erfinder:
• **Melcher, Rolf
  76669 Schönborn (DE)**
• **Münzer, Roland
  44227 Dortmund (DE)**

(74) Vertreter: **Durm Patentanwälte PartG mbB
Patentanwälte
Moltkestrasse 45
76133 Karlsruhe (DE)**

(56) Entgegenhaltungen:
**EP-A1- 2 631 674     EP-A1- 2 679 982
US-A1- 2013 092 815**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Sensorsystem zur Erkennung mindestens eines Objekts in einer Übertragungsstrecke, die eine erste Übertragungsstrecke und eine zweite Übertragungsstrecke einschließt, zwischen einem Sender und einem Empfänger. Das Sensorsystem umfasst mindestens einen Sender, der mit einem Speisesignal angesteuert wird, um zumindest ein bekanntes Sendesignal des Senders in die Übertragungsstrecke hinein zu senden, das nach Durchgang durch mindestens einen Teil der Übertragungsstrecke und Beeinflussung durch mindestens ein Objekt als modifiziertes Sendesignal zumindest zu einem Empfänger gelangt, der Teil des Sensorsystems ist. Das modifizierte Sendesignal wird als modifiziertes Empfangssignal im Empfänger empfangen, der daraus ein Empfängerausgangssignal mit wenigstens einem modifizierten Empfängerausgangssignalanteil bildet. Eine Verarbeitungseinheit des Sensorsystems verarbeitet das Verarbeitungszwischensignal, welches das Empfängerausgangssignal umfasst, weiter und separiert mindestens einen modifizierten Empfängerausgangssignalanteil, aus dem eine Regelwert-Matrix mit wenigstens einem Regelwert-Signal erzeugt wird, wobei mindestens ein Regelwert-Signal von Null verschieden ist.

Aus dem Stand der Technik sind eine ganze Reihe verschiedener Verfahren zum Erkennen eines Objekts in einer optischen Übertragungsstrecke bekannt.

Zu nennen sind hier beispielhaft:

DE102012024597.1

DE102013013664.4

WO2013124018

DE10001955A1

DE10024156A1

DE19839730C1

DE930983U1

DE10001943C1

DE10346741B3

DE102004025345B3

DE102005013325A1

DE102005010745B3

DE102007005187B4

Allen diesen Verfahren ist gemeinsam, dass sie nicht in der Lage sind, mehrere Objekte in einer Übertragungsstrecke ohne Zuhilfenahme verschiedener Zeitschlitze zu erkennen. Derartige Verfahren mit Zeitschlitzen sind jedoch aufwendig.

Die EP 2 679 982 A1 offenbart ein Sensorsystem und ein Verfahren zur Vermessung der Übertragungseigenschaften eines Messsystems zwischen einem Sender und einem Empfänger. Der Der Sender sendet ein Sendesignal in die Übertragungsstrecke hinein, das nach Durchgang durch mindestens einen Teil der ersten Übertragungsstrecke von dem Empfänger detektiert wird. Der Empfänger empfängt das Sendesignal und bildet daraus ein Empfängerausgangssignal. Eine Verarbeitungseinheit verarbeitet das Empfängerausgangssignal weiter und gewinnt eine Information der Eigenschaften der Übertragungsstrecke.

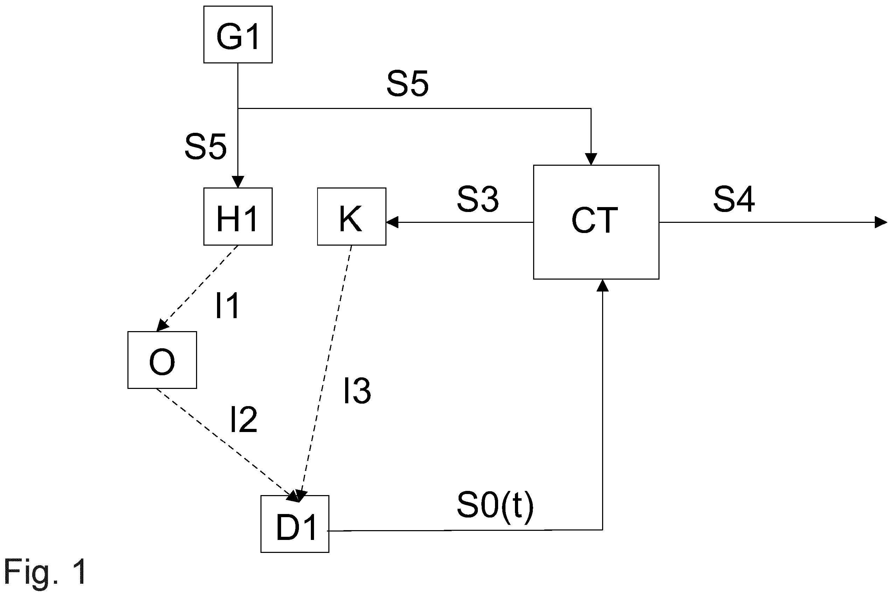

Das Problem wird anhand der Figuren 1 bis 4 erläutert:

Figur 1 zeigt ein nicht beanspruchtes, typisches Sensorsystem, ein sogenanntes Halios-System, wie es aus dem Stand der Technik bekannt ist. Ein Signalgenerator G1 erzeugt ein Sendesignal S5 und speist damit einen ersten Sender H1. Dieser strahlt in eine erste Übertragungsstrecke I1 ein, die an einem Objekt O endet.

Dort wird das Signal, welches das Objekt O durch die Übertragungsstrecke I1 erreicht hat, in eine zweite Übertragungsstrecke I2 hinein transmittiert oder reflektiert. Nach Durchgang durch diese zweite Übertragungsstrecke I2 wird das Signal von einem Empfänger D1 aufgefangen und an einen Regler CT als Empfängerausgangssignal S0(t) weitergegeben. Dieser erzeugt aus dem Sendesignal S5 und dem Empfängerausgangssignal S0(t) das Kompensatorspeisesignal S3. Mit diesem Kompensatorspeisesignal S3 wird ein Kompensationssender K gespeist, der ebenfalls (über eine dritte Übertragungstrecke I3) in den Detektor (Empfänger) D1 einstrahlt. Diese Einstrahlung erfolgt typischerweise linear überlagernd zum Signal, das über die Übertragungsstrecke I2 zum Detektor gelangt. Der Regler CT filtert und verstärkt dabei bestimmte Signalanteile des Empfängerausgangssignals S0(t) in der Art, dass die Überlagerung der Signale im Detektor im Wesentlichen einen Gleichpegel ergibt. Das Kompensatorspeisesignal S3 ist im eingeschwungenen Zustand also komplementär kompensierend zu dem nach dem Durchgang durch die beiden Übertragungsstrecken modifizierten Sendesignal S5. Eine Regelgröße S4 des Reglers CT stellt dabei typischerweise einen Parameter dar, der mit den Transmissions- oder Reflexionseigenschaften des Objekts O oder den Übertragungseigenschaften der beiden Übertragungsstrecken I1 und I2 korrespondiert.

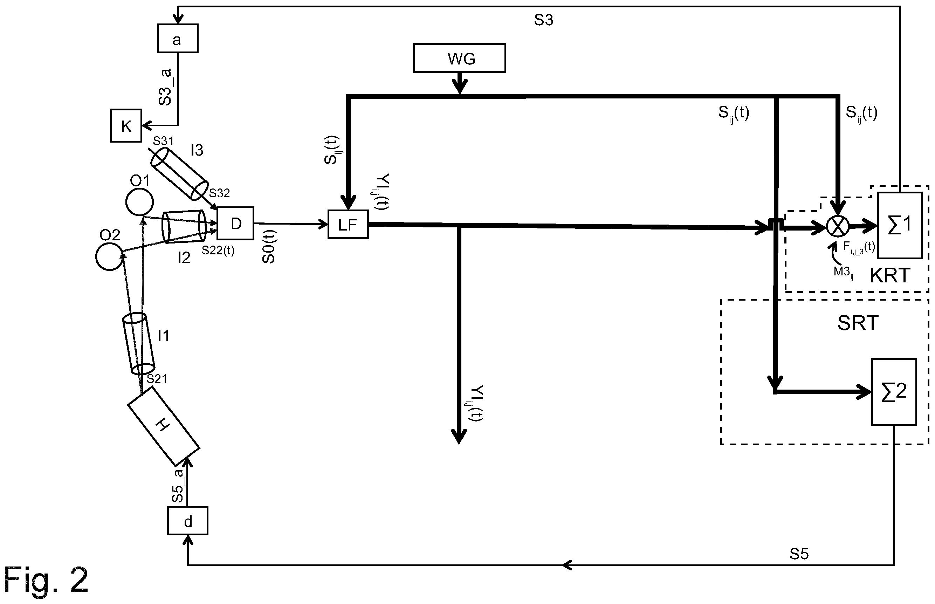

Figur 2 zeigt ein solches System etwas detaillierter: Der Sender G1 wird durch einen Wavelet-Generator WG ersetzt, der nun mehrere Signale $s_{i,j}(t)$ (Wavelets) liefert. Diese Signale $s_{i,j}(t)$ (Wavelets) werden durch eine erste Vorrichtung, die eine Linearform LF bildet, mit dem Empfängerausgangssignal S0(t) verknüpft. Es ergibt sich eine Ausgangssignalmatrix $YI_{i,j}$ der Linearform LF. Diese ist eine Matrix von Regelwertsignalen $(yii,j(t))$. Jedes Element, also jedes Regelwertsignal $(yii,j(t))$, dieser Ausgangssignalmatrix $YI_{i,j}$ stellt im Idealfall eines ungestörten Systems mit idealen Komponenten einen Quasigleichpegel dar. In der Realität verhindern Störungen, Rauschen und Regelfehler das erreichen eines perfekten Quasigleichpegels.

Jedes Regelwertsignal $(yi_{i,j}(t))$ dieser Ausgangssignalmatrix $YI_{i,j}$ der Linearform (LF) wird nun in einer Kompensationsrücktransformationseinheit KRT durch jeweils einen Multiplizierer einer dritten Multipliziereinheit $M3_{ij}$ wieder mit dem korrespondierenden Wavelet-Signal $s_{i,j}(t)$ (Ausgangssignal) des Wavelet-Generators WG multipliziert. Es ergibt sich die Roh-Kompensationssignalmatrix $F_{i,j\_3}$ mit den zugehörigen Rohkompensationssendesignalen $F_{i,j}3(t)$. Die einzelnen Elemente dieser Roh-Kompensationssignalmatrix $F_{i,j\_3}$ werden durch einen Summierer $\Sigma1$ zum Kompensationssignal S3 reduziert, genauer gesagt, zusammengefasst. Über einen ersten Sendeverstärker a wird der Kompensationssender K gespeist. Dabei versieht der erste Verstärker das Kompensationssignal (S3) typischerweise mit einem Offset. Der Kompensationssender (K) strahlt wieder in die besagte dritte Übertragungsstrecke I3 das gesendete Kompensationssendersignal S31 ein. Die dritte Übertragungsstrecke I3 ist vorzugsweise bekannt. Am Ausgang der dritten Übertragungsstrecke I3 befindet sich wieder der Empfänger D. Dieser empfängt das gesendete Kompensationssendersignal S31 nach Durchgang durch die dritte Übertragungsstrecke I3 als zweites Übertragungsstreckenausgangssignal S32.

Das Sendesignal S5 wird durch summierende Zusammenfassung typischer Weise nur eines Teils der Wavelet-Signale $s_{i,j}(t)$ durch den zweiten Summierer $\Sigma2$ gebildet. Dabei kann im Extremfall eines der Signale $s_{i,j}(t)$ dem Sendesignal S5 entsprechen. Das Sendesignal S5 speist wieder den Sender H, der in eine erste Übertragungsstrecke I1 das gesendete Sendersignal S21 einspeist an deren Ausgang das Signal durch ein oder mehr Objekte O1, O2 reflektiert oder transmittiert wird. Dabei wird das derartig durch Reflexion oder Transmission modifizierte Signal in eine zweite Übertragungsstrecke I2 eingespeist. Am Ausgang der zweiten Übertragungsstrecke wird das durch die Objekte O1, O2 und die Übertragungsstrecken I1, I2 modifizierte Signal als erstes Übertragungsstreckenausgangssignal S22 ebenfalls in den Empfänger D eingespeist, wo sich die das erste Übertragungsstreckenausgangssignal S22 und das zweite Übertragungsstreckenausgangssignal S32 typischerweise summierend oder multiplizierend überlagern.

Im Folgenden schreiben wir zur Vereinfachung die Linearform zweier Signale A und B als LF(A,B). A, B, C seien beliebige Signale, $\alpha$ sei eine reelle Zahl.

Eine Linearform (LF) zweier Signale A(t) und B(t), die durch eine Linearformfunktion LF(A(t), B(t)) beschrieben wird und wie sie die erste Vorrichtung zur Bildung ihrer Ausgangssignale $yi_{ij}(t)$ durchführt, hat bezüglich der Linearformfunktion und eines dritten Signals C(t) und einer komplexen Konstante $\alpha$ folgende Eigenschaften:

$$LF(A(t) + B(t), C(t)) = LF(A(t), C(t)) + LF(B(t), C(t))$$

$$LF(\alpha * A(t), C(t)) = \alpha * LF(A(t), C(t))$$

Zwei Signale A(t) und C(t) werden im Folgenden als orthogonal bezeichnet, wenn LF(A(t), C(t))=0 oder in der Realität LF(A(t), C(t))~0 gilt und A(t) und C(t) von Null verschieden sind.

Solange gilt: $LF(s_{i,j}(t), s_{kl}(t))=0$ für $i \neq k$ oder $j \neq l$, solange sind die $s_{i,j}(t)$ untereinander orthogonal. Daher wird der Regler nur die Anteile des ersten Übertragungsstreckenausgangssignals S22 ausregeln, die exakt einem vom Null verschiedenen Signal $s_{i,j}(t)$ entsprechen.

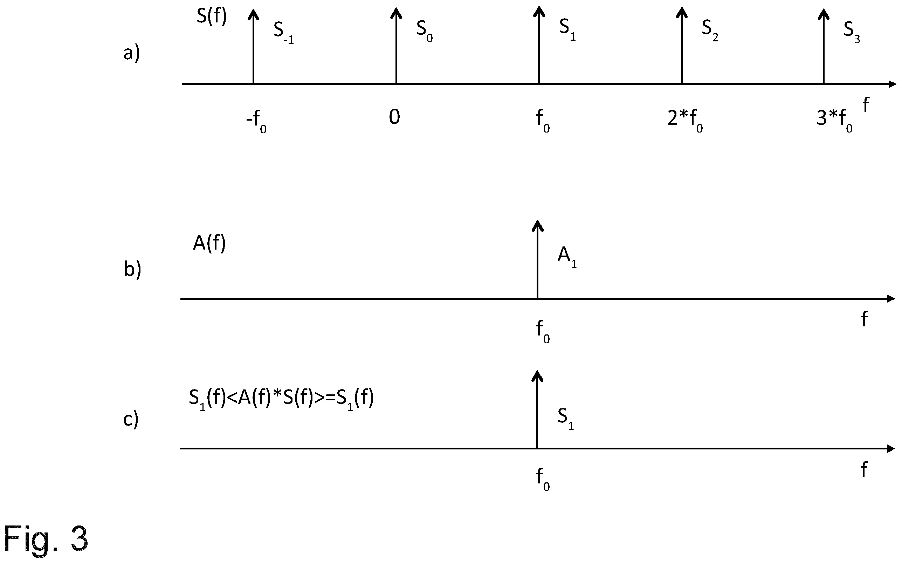

In Figur 3a sind vereinfacht mehrere Signalanteile $S_{-1}$ bis $S_3$ eines Signals S(t) gezeigt, wobei S(t) im Frequenzbereich als Signalbetragsspektrum S(f) dargestellt ist. Diese Signale entsprechen ausdrücklich nicht den Signalen S(-1) bis S3. Die Frequenzen der Signalanteile $S_{-1}$ bis $S_3$. sollen ganzzahlige Vielfache einer Grundfrequenz $f_0$ sein.

Damit sollen diese Signalanteile $S_{-1}$ bis $S_3$ bezüglich der Linearform LF orthogonal zueinander sein. Wird nun ein Signal S(f), wie in Figur 3a dargestellt, als Empfängerausgangssignal S0(t) in das oben beschriebene Halios-System gemäß Figur 2 eingespeist, so ergibt eine beispielhafte Linearform LF(S0(t),$S_1$), die durch die erste Vorrichtung durchgeführt wird, dieses Signals S0(t), das hier ja das Signal S(t) sein soll, und eine Signalkomponente dieses Signals S0(t) bzw. S(t), hier beispielsweise die Komponente $S_1$, als A(f) bezeichnet (Figur 3b), einen Pegel, der nochmals multipliziert mit $S_1$(f) die Signalkomponente $S_1$(f) entsprechend ihrem Anteil in S0(t) reproduziert, aber eben keine Störungen. Die anderen Frequenzkanäle sprechen aufgrund der Orthogonalität der Signalanteile $S_{-1}$ bis $S_3$ nicht an, Figur 3b, 3c.

Ein solches System ist beispielsweise in der EP2631674A1 beschrieben. Das Problem eines solchen Systems ist, dass mehrere Objekte nur begrenzt getrennt werden können. Befinden sich zwei Objekte in einem Zeitschlitz entsprechend der EP2631674A1, so ist eine Trennung nicht möglich.

Ursache hierfür ist die in der EP2631674A1 geforderte Orthogonalität der Basissignale, die die Auflösung beschränkt. Dieses Problem taucht auch in Systemen gemäß DE102013013664 und DE102012024597 auf. Dort wird jeweils bereits ein Wavelet-Generator verwendet, ohne das Problem der Notwendigkeit von Zeitschlitzen wirklich zu lösen. Die DE10001943C2 offenbart eine technische Lehre, welche ebenfalls die Unterscheidung verschiedener Objekte mittels der dort offenbarten Messtechnik nicht ermöglicht.

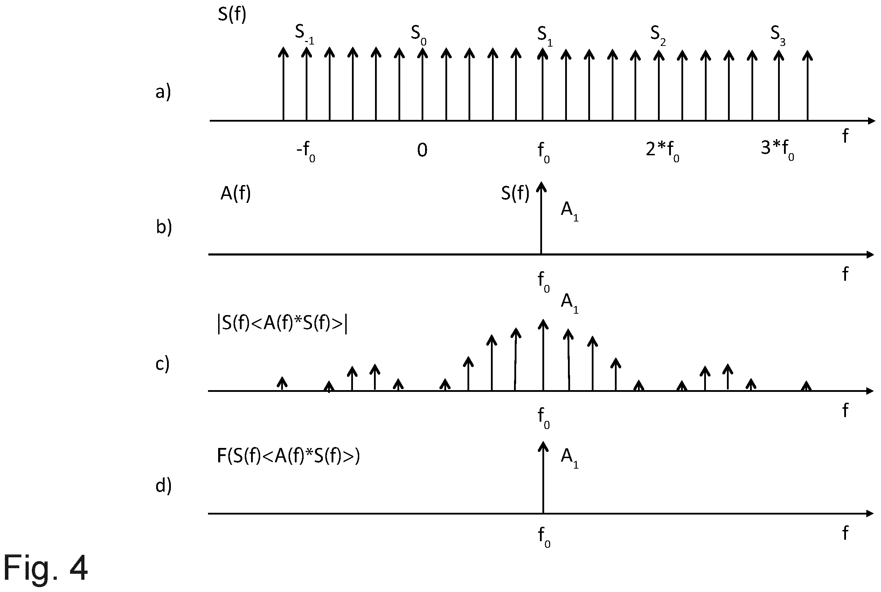

Verzichtet man jedoch auf die Orthogonalität der Wavelet-Signale $s_{i,j}$(t) des Wavelet-Generators (WG) zueinander, so sprechen immer mehrere i,j-Kanäle an. Dies ist in Figur 4a dargestellt. Hierbei sind die $S_{-1}$ bis $S_3$ aus Figur 3 nochmals eingezeichnet. Die zwischen den die $S_{-1}$ bis $S_3$ aus Figur 3 liegenden Signalkomponenten des Spektrums sind zusätzliche Wavelet-Signale $s_{i,j}$(t), wobei die Signale $S_{-1}$ bis $S_3$ aus Figur 3 ebenfalls zu diesen Wavelet-Signalen $s_{i,j}$(t) gehören. Sind die Wavelet-Signale $s_{i,j}$(t) dichter zueinander im Frequenzbereich erzeugt (Figur 4a), so sprechen bei Korrelation mit einem einzelnen Signal (Figur 4b) immer einige Seitenkanäle mit an (Figur 4c). In dem willkürlichen Beispiel ergibt sich eine Empfindlichkeit ähnlich dem Betrag einer si(f)-Funktion. Die Korrelation zu genau einem Wavelet-Signal ist bei einem Verlust der Orthogonalität also nicht mehr eindeutig. Diese Uneindeutigkeit ist der Kern des zu lösenden Problems.

Es ist somit Aufgabe der vorliegenden Erfindung, die im Stand der Technik bekannten Probleme der Erkennung einzelner Objekte bei Vorhandensein mehrerer Objekte weiter zu verbessern. Es ist somit das eigentliche Ziel der Erfindung, eine Erkennung mehrerer Objekte innerhalb einer optischen Übertragungsstrecke zu ermöglichen, ohne dass die Objekte sich in bestimmten räumlichen Bereichen befinden müssen, um getrennt werden zu können.

Gelöst wird die Aufgabe durch ein Sensorsystem mit den Merkmalen des Anspruchs 1.

Die bekannten Systeme versuchen die obigen Probleme und das Erkennen einzelner Objekte durch eine Orthogonalisierung mittels Zeitschlitzen zu lösen. Gemäß der vorliegenden Erfindung wird - auch bei nicht orthogonalen Wavelet-Signalen $s_{i,j}$(t) (Basissignalsatz) - ein Signal, das ein Objekt repräsentiert und das mit einem einzigen der Wavelet-Signale $s_{i,j}$(t) (Basissignale) korreliert wird, eindeutig wieder gefunden (Figur 4d). Die Erfindung, die nicht mehr an Zeitschlitze gebunden ist, ermöglicht somit eine höhere Auflösung als Systeme im Stand der Technik. Die Erfindung ist also insbesondere im Gegensatz zum Stand der Technik in der Lage, mit nicht-orthogonalen Basis-Signalen $s_{i,j}$(t), also einer untereinander nicht-orthogonalen Signal-Matrix $S_{i,j}$ des Wavelet-Generators (WG) bestehend aus den Wavelet-Signalen $s_{i,j}$(t) zu arbeiten.

Bei der Erfindung handelt es sich um ein Sensorsystem zur Erkennung mehrerer Objekte in einer Übertragungsstrecke. Diese Übertragungsstrecke besteht typischerweise aus einer ersten Übertragungsstrecke und einer zweiten Übertragungsstrecke. Die Objekte in der Übertragungsstrecke befinden sich typischerweise zwischen der ersten Übertragungsstrecke und der zweiten Übertragungsstrecke. Eine der Übertragungsstrecken kann dabei die Länge Null haben. Auch kann eine der Übertragungsstrecken selbst das Objekt repräsentieren, das vermessen werden soll. Die Übertragungsstrecken befinden sich zwischen dem Sender und einem Empfänger. Die Anordnung aus Figur 2 entspricht also insoweit dem Stand der Technik.

In der folgenden Beschreibung wird zwar vorauseilend an verschiedenen Stellen auf die Figuren zum besseren Verständnis bereits Bezug genommen, diese werden aber in der Figurenbeschreibung nochmals tiefergehend erläutert. Die Beschreibung ist also in ihrer Verallgemeinerung zu verstehen und nicht durch die dargestellten Elemente beschränkt.

Das Sensorsystem umfasst mindestens einen Sender, der mit einem Speisesignal (S5) angesteuert wird und daraufhin ein bekanntes Sendesignal (S21) in die erste Übertragungsstrecke (I1) hinein sendet. Nach Durchgang durch mindestens einen Teil der ersten Übertragungsstrecke und Reflexion an einem Objekt oder Transmission durch ein Objekt gelangt das nun modifizierte Sendesignal über die zweite Übertragungsstrecke als modifiziertes Empfangssignal S22(t) zu dem Empfänger. Dabei weist das modifizierte Empfangssignal S22(t) einen modifizierten Empfangssignalanteil (S22e(t)) auf. Dieser modifizierte Empfangssignalanteil S22e(t) ist die Signalkomponente des modifizierten Sendesignals S22(t), die auf die Wirkungen der Transmission bzw. der Reflektion zurückzuführen ist. Da sie Teil des Empfangssignals S22(t) ist, ist sie in den Zeichnungen nicht eingezeichnet.

Aus dem Stand der Technik ist bekannt, dass der Empfänger (D) des Sensorsystems das von dem Sender (H) ausgesandte Sendesignal (S21) nach Modifikation durch Übertragungsstrecken (I, I1, I2) und Objekte (O) in den Übertragungsstrecken (I) empfängt. Typischerweise wird das Signal während dieser Übertragung an mindestens einem Objekt (O) reflektiert oder durch dieses Objekt hindurch transmittiert. Das reflektierte oder transmittierte Empfangssignal (S22) enthält dabei den modifizierten Empfangssignalanteil (S22e(t)), der das Echo-Signal repräsentiert. Aus dem Echo-Signal kann auf das Objekt und seine Entfernung oder Position geschlossen werden. Die erfindungsgemäße Vorrichtung kann daher auch diesen Empfangssignalanteil (S22e(t)) separieren.

Das Empfängerausgangssignal (S0(t)), das der Empfänger (D) ausgibt, enthält daher als Signalkomponente des Empfängerausgangssignals (S0(t)) einen modifizierten Ausgangssignalanteil (S0e(t)), der mit dem besagten modifizierten Empfangssignalanteil (S22e(t)) des Empfangssignals (S22(t)) korrespondiert. Diese Signalkomponente des Empfängerausgangssignals (S0(t)) ist als Signalanteil nicht in den Zeichnungen eingezeichnet. Sie korrespondiert zum modifizierten Empfangssignalanteil S22e(t) des transmittierten oder reflektierten Empfangssignals (S22).

Das erfindungsgemäße Sensorsystem umfasst des Weiteren eine erste Verarbeitungseinheit, die eine Linearform (LF) zweier Signale bildet. Bei diesen beiden Signalen handelt es sich zum ersten um ein Verarbeitungszwischensignal, das das Empfängerausgangssignal (S0) umfasst, oder um ein kompensiertes Empfängerausgangssignal (S1(t)) und zum zweiten um wenigstens ein Basissignal $s_{i,j}(t)$ (Wavelet). Die Verarbeitungseinheit kann beispielsweise einen Addierer A1 oder ein anderes Element umfassen, das eine Addition ausführt. Ist kein addierendes Element vorhanden, kann das Verarbeitungszwischensignal bzw. das kompensierte Empfängerausgangssignal S0(t) mit dem Empfängerausgangssignal des Empfängers identisch sein.

Durch die Berechnung der Linearform in der Verarbeitungseinheit (LF) werden die Ausgangssignalanteile separiert. Dabei wird typischerweise für jedes Basissignal $s_{i,j}(t)$ durch eine zugehörige Linearform (LF) aus dem Eingangssignal der Verarbeitungseinheit (beispielsweise das Verarbeitungszwischensignal oder das kompensierte Empfängerausgangssignal S1(t)) ein Signal einer Regelwert-Matrix $(YI_{i,j})$ in Form von entsprechenden Regelwert-Signalen (yii,j(t)) erzeugt. Dies ist natürlich nur sinnvoll, wenn zumindest eines der Regelwert-Signale (yii,j(t)) von Null verschieden ist.

Erfindungsgemäß weist das Sensorsystem einen Schätzer auf, der wenigstens eines der Regelwert-Signale $(yi_{i,j}(t))$ selektiert. Obwohl aufgrund der fehlenden Orthogonalität in dem Empfangssignal auch Seitenbänder auftreten, wird auch das Signal empfangen und gemessen, das das Objekt repräsentiert. Der Schätzer ermittelt genau das Signal, das ein Objekt repräsentiert und das mit einem einzigen der Basissignale $s_{i,j}(t)$ (Wavelets) korreliert wird. Er ist also in der Lage das entsprechende Signal eindeutig wiederzufinden.

Darüber hinaus kann aus dem ermittelten Echo-Signal neben der Bestimmung der Entfernung eines Objekts zu dem Sensorsystem auch die Reflexionseigenschaft eines Objekts in der Übertragungsstecke und/oder die Transmissionseigenschaften der Übertragungsstrecke selbst bestimmt werden. Auf diese Weise lassen sich beispielsweise auch Eigenschaften eines Materials oder eines Stoffes in der Übertragungsstrecke bestimmen.

Somit sind letztlich mindestens eines der Regelwert-Signale (yii,j(t)) oder ein daraus abgeleitetes Regelwert-Signal (xi,j(t), (zii,j(t)) ein Maß für eine Eigenschaft oder den Abstand des Objekts zu dem Sensorsystem oder ein Maß für eine Eigenschaft der Übertragungsstrecke selbst.

Bevorzugt ist der Schätzer deshalb als Maximum-Schätzer ausgebildet. In diesem Fall sucht der Schätzer den Maximalwert der Regelwert-Signale (yii,j(t)). Aus dem Regelwert-Signal kann dann ein Rückschluss auf das Objekt und/oder auf die Entfernung des Objekts zu dem Sensorsystem gezogen werden.

Durch Anwendung eines Schätzers ist es daneben auch möglich, mehrere Objekte zu unterscheiden und die Objekte und ihre Entfernungen zu dem System zu ermitteln. Daneben kann bevorzugt auch das Vorhandensein weiterer Objekte erkannt werden, deren Entfernung zum Sensorsystem jedoch nicht ermittelt wird. Hierzu wird bevorzugt das Echo-Informationssignal (EInf) verwendet, das ausgegeben und/oder weiterverarbeitet werden kann.

In einer erfindungsgemäßen Ausführungsform umfasst das Sensorsystem einen Referenzspeicher (MRef), in dem Regelwert-Signale einer Referenzmessung gespeichert werden. Bevorzugt wird der Schätzer von einem der Regelwert-Signale aus dem Referenzspeicher gespeist. Dieses Referenz-Regelwert-Signal kann dann zu dem aktuellen Regelwert-Signal in dem Schätzer in Beziehung gesetzt werden, beispielsweise durch Quotientenbildung oder durch Subtraktion.

Daneben können bevorzugt nicht nur die Regelwert-Signale (yii,j(t)), sondern auch oder stattdessen auf diesen Regelwert-Signalen $(yi_{i,j}(t))$ basierende weiterverarbeitete Signale in dem Schätzer verarbeitet werden. Bevorzugt sind die weiterverarbeiteten Signale Ausgangssignale eines im Signalpfad hinter der Verarbeitungseinheit angeordneten Filters oder Integrators. Optional können die weiterverarbeiteten Signale auch für jedenfalls einen oder mehrere Zeitpunkte zwischengespeichert werden, beispielsweise in einem ersten oder zweiten Speicher.

In einer erfindungsgemäßen Ausführungsform erzeugt der Wavelet-Generator wenigstens zwei Wavelets als Basissignale. Je zwei Wavelets bilden ein Paar, das aus einer "Sinusfunktion" und einer dazu orthogonalen "Cosinusfunktion" besteht. In der Verarbeitungseinheit werden bevorzugt Fourier-Koeffizienten gebildet. Dies erfolgt mittels der Linearform der Verarbeitungseinheit, die bevorzugt eine Multiplikation des Bearbeitungszwischensignals mit der jeweiligen "Cosinusfunktion" oder "Sinusfunktion" und anschließender Integration ausgeführt wird. In dem Schätzer findet vorzugsweise eine Quotientenbildung von Referenz-Fourier-Koeffizienten und aktuell ermittelten Fourier-Koeffizienten statt. Die Referenz-Fourier-Koeffizienten können dabei in einem Referenzspeicher (MRef) zwischengespeichert werden.

Sie sind in einer Referenzmessung vor der eigentlichen Messung mittels eines Referenzsenders und der Verarbeitungseinheit erzeugt worden. Der Referenzsender wird in der Referenzmessung mit einem bekannten Basissignal gespeist, vorzugsweise einem Wavelet-Signal, das über eine bekannte Übertragungsstrecke direkt zu dem Empfänger gelangt.

In dieser bevorzugten Ausführungsform wird das Echo-Signal in einer IFFT-Einheit mittels einer inversen Fourier-Transformation aus dem Ausgangssignal des Schätzers gebildet. Optional kann die IFFT-Einheit in dem Schätzer integriert sein. Diese Ausführungsform zeigt also ein Beispiel des erfindungsgemäßen Sensorsystems bei einer Verarbeitung im Frequenzbereich.

In einer bevorzugten Ausführungsform verfügt das erfindungsgemäße Sensorsystem zusätzlich über einen Filter, bevorzugt über einen nicht-linearen Filter (NLF). Dieser Filter wandelt typischer Weise alle oder zumindest einen Teil dieser Regelwert-Signale ($yi_{i,j}(t)$) (oder andere aus diesen Regelwert-Signalen abgeleitete andere mögliche Eingangssignale des (nicht-linearen) Filters (NLF-Eingangssignale) ($y_{i,j}(tn)$, $x_{i,j}(t)$, $z_{i,j}(t)$), die später erläutert werden) zu Ausgangssignalen $nf_{i,j}(t)$ des Filters, bevorzugt des nicht-linearen Filters (NLF-Ausgangssignale), um. Dabei selektiert er bevorzugt durch einen nichtlinearen Prozess einige wenige der Regelwert-Signale ($yii,j(t)$). Alternativ können auch andere aus diesen Regelwert-Signalen abgeleitete Eingangssignale des nicht-linearen Filters (NLF-Eingangssignale), wie beispielsweise $y_{i,j}(tn)$, $x_{i,j}(t)$, $z_{i,j}(t)$, die später erläutert werden, selektiert werden. Natürlich muss das Sensorsystem mindestens eine Einheit (z.B. einen Wavelet-Generator WG) umfassen, die zumindest ein Speisesignal (S5) zur Speisung des Senders erzeugt. Ebenso muss das Sensorsystem mindestens eine Einheit umfassen, die ein Kompensatorspeisesignal (S3) zur Speisung eines Kompensators bzw. Kompensationssenders (K) erzeugt.

Es bestehen dabei grundsätzlich zwei Möglichkeiten für die Regelung der Sensorsystemstabilität. Zum Einen kann das Sendesignal (S5) geregelt werden und zum Anderen das Kompensatorspeisesignal (S3). Eine Kombination von beiden Verfahren nach einem Regelalgorithmus ist natürlich immer möglich.

Das erfindungsgemäße Sensorsystem weist eine Rücktransformations-Einheit auf, die aus zumindest einem Teil der Regelwertsignale ($yii,j(t)$) eine Senderücktransformation (SRT) durchführt und das Speisesignal (S5) erzeugt. Zusätzlich oder alternativ führt die Rücktransformations-Einheit aus wenigstens einem Teil der Regelwertsignale eine Kompensationsrücktransformation (KRT) durch und erzeugt das Kompensationssignal (S3). Hierbei erfolgt die Rückführung des Kompensationsspeisesignals in das Sensorsystem hinein, so dass am Eingang der Verarbeitungseinheit (LF), die eine Linearform umfasst, ein kompensiertes Empfängerausgangssignal (Verarbeitungszwischensignal) anliegt. Auf die Verarbeitungseinheit (LF) mit der Linearform wird noch eingegangen.

Somit umfasst bevorzugt das Sensorsystem eine Einheit, die eine Senderücktransformation (SRT) durchführt, die aus zumindest einem Teil der Regelwertsignale ($yii,j(t)$) oder der Schätzer-Eingangssignale oder aus diesen abgeleiteten Signalen ($inf_{i,j}(t)$, $S4_{i,j}(t)$), die später erläutert werden, das Speisesignal (S5) erzeugt und/oder eine Einheit, die eine Kompensationsrücktransformation (KRT) durchführt, die aus zumindest einem Teil der Schätzer-Eingangssignale oder aus diesen abgeleiteten Signalen ($inf_{i,j}(t)$, $S4_{i,j}(t)$), die später erläutert werden, ein Kompensatorspeisesignal (S3) erzeugt.

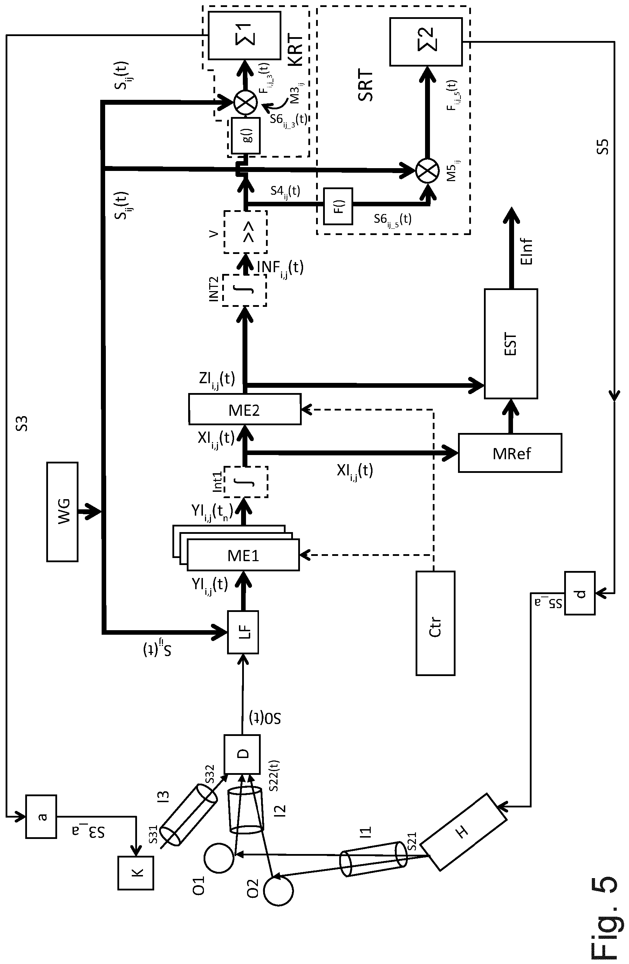

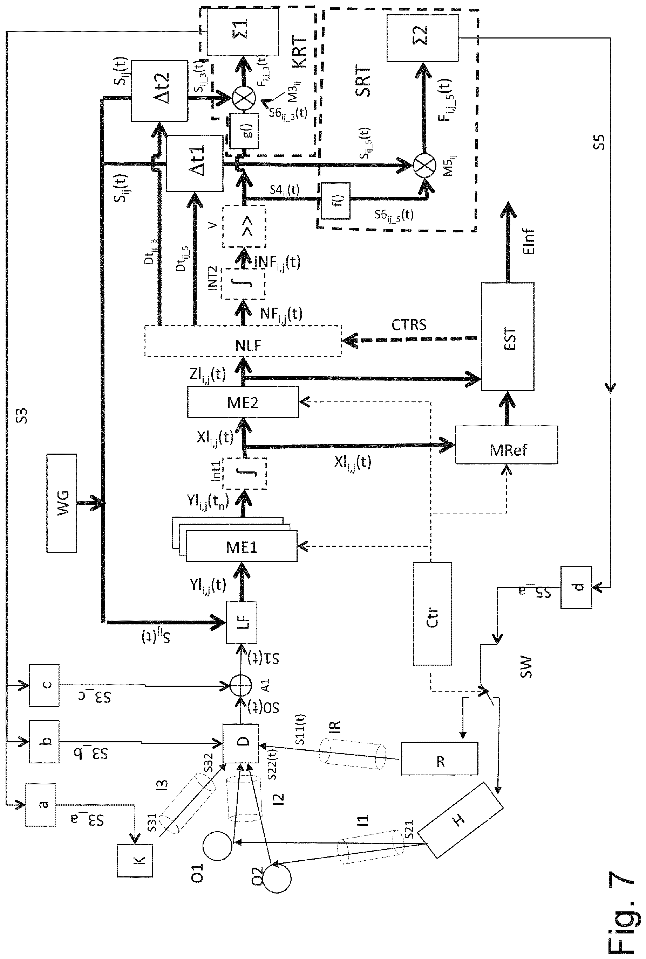

Wie bei anderen Halios-Systemen ist eine Rückführung des Kompensatorspeisesignals (S3) Teil des Systems. Für diese Rückführung bestehen grundsätzlich drei Möglichkeiten. Die Möglichkeiten sind alle beispielhaft in Figur 7 gezeigt. Dabei wird ausdrücklich daraufhin gewiesen, dass jede der Kompensationsmöglichkeiten einzeln oder in einer beliebigen (hier nicht dargestellten) Kombination auftreten kann. Im Einzelnen sind die drei Möglichkeiten: Zum Ersten kann die Rückführung des Kompensatorspeisesignals (S3) als erstes Kompensatorsignal (S3_a) (siehe z.B. Figur 5) verstärkt und/oder gefiltert mit einer ersten Kompensationsfilterfunktion a(S3) über einen Kompensationssender (K) und eine dritte Übertragungsstrecke (I3), wie bereits beschrieben, summierend überlagernd oder multiplizierend überlagernd im Empfänger (D) erfolgen. Typischerweise erfolgt diese Überlagerung im Empfänger D summierend, wenn dieser linear arbeitet. Sofern dieser eine nicht-lineare Empfindlichkeitskennlinie besitzt, können beispielsweise höhere Terme einer Taylor-Entwicklung ausgenutzt werden, um die Multiplikation zu realisieren. Die nachfolgende Linearform (LF) wird dann beispielsweise nicht mit einem Signal $s_{i,j}(t)$ sondern mit einem Signal $s_{i,j}(t)^2$ durchgeführt. Zum Zweiten kann die Rückführung des Kompensatorspeisesignals (S3) als zweites Kompensatorsignal (S3_b) (siehe z.B. Figur 7) verstärkt und/oder gefiltert mit einer zweiten Kompensationsfilterfunktion b(S3) summierend überlagernd oder multiplizierend überlagernd direkt in den Empfänger (D) hinein erfolgen.

Zum Dritten kann die Rückführung des Kompensatorspeisesignals (S3) als drittes Kompensatorsignal (S3_c) (siehe z.B. Figur 7) verstärkt und/oder gefiltert mit einer dritten Kompensationsfilterfunktion c(S3) summierend in einem Addierer (A1) mit dem Empfängerausgangssignal S0(t) zum kompensierten Empfängerausgangssignal S1(t) erfolgen.

Wie bei allen Halios-System werden dabei die Vorzeichen und Verstärkungen und Übertragungsfunktionen aller Elemente so gewählt, dass sich im Regelkreis des Sensorsystems Stabilität ergibt. Hierunter versteht der Fachmann, dass das System so geregelt wird, dass am Ausgang des Empfänger im Wesentlichen (bis auf einen Regelfehler oder das Systemrauschen) ein Gleichsignal anliegt, bevorzugt ein Nullsignal. Typischerweise ist dann mindestens ein Wert der Regelwert-Matrix $YI_{i,j}(t)$ eine charakteristische Größe für wenigstens einen von n x m möglichen Ausgangssignalanteilen.

Ein weiteres Charakteristikum des erfindungsgemäßen Sensorsystems ist, dass das Sensorsystem über einen Wavelet-Generator (WG) verfügt, der bevorzugt Wavelets in der beispielhaften Definition des Buches von Stephane Mallat, "A Wavelet Tour of Signal Processing" Academic Press London 1997 erzeugt.

Danach erzeugt beispielsweise der Wavelet-Generator (WG) bevorzugt aus mindestens einem Ur-Wavelet $(s_{1,1}(t))$ das Basissignal, das periodisch mit einer Ur-Wavelet-Periode (P) ist, wobei eine Ur-Wavelet-Periode (P) die Länge unendlich haben kann.

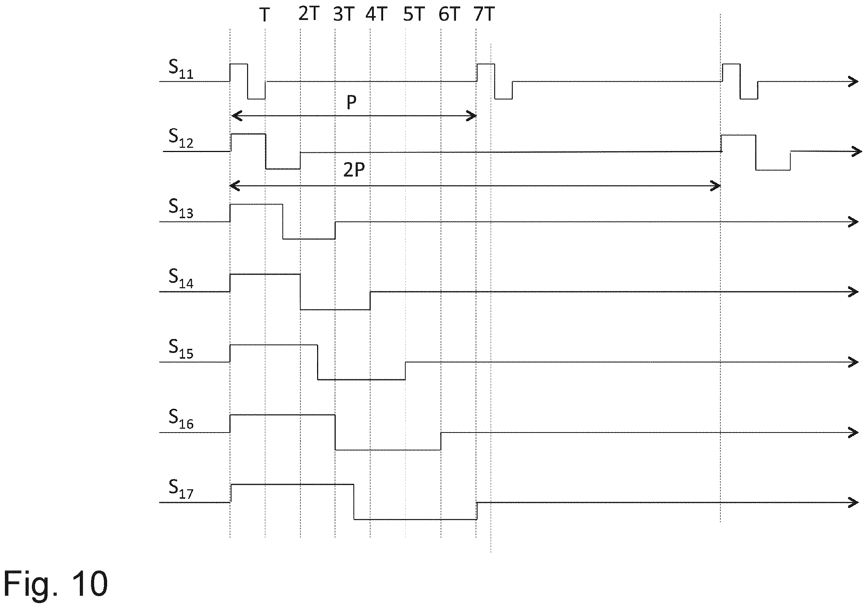

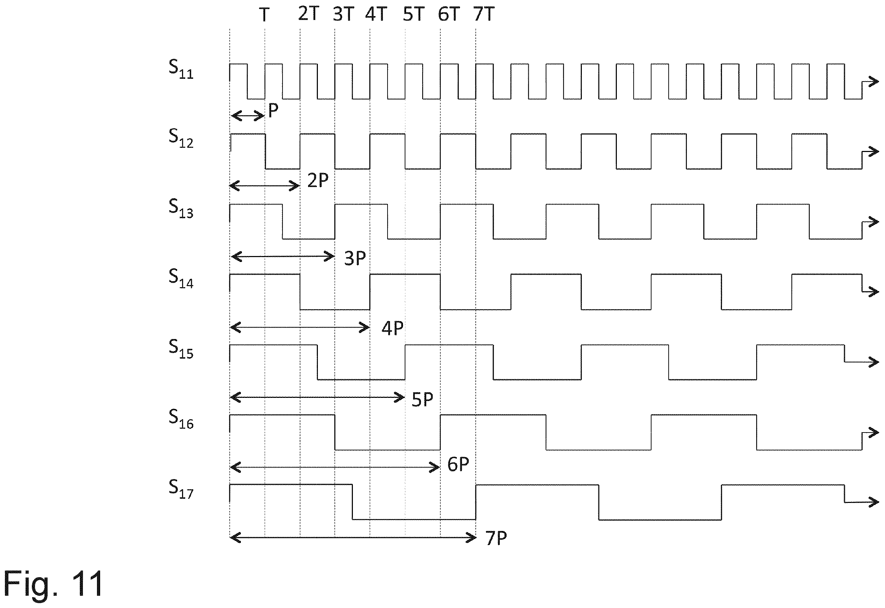

Bei mehreren Wavelet-Generatoren, beispielsweise zwei Wavelet-Generatoren, erzeugen diese aus mindestens einem - möglicherweise Wavelet-Generator spezifischen - Ur-Wavelet $(s_{1,1\_a}(t) \; s_{1,1\_b}(t))$ (siehe z.B. Figur 10) ein jeweiliges Basissignal, das periodisch mit einer (möglicherweise spezifischen) Ur-Wavelet-Periode (Pa, Pb) ist, wobei auch hier eine oder mehrere dieser Ur-Wavelet-Perioden (Pa, Pb) die Länge unendlich haben können. Die Wavelets sind hierdurch zueinander zeitlich um den Abstand der Periode P bzw. Pa und Pb beabstandet, wie in Figur 11 gezeigt.

Neben diesem Abstand weisen aber die Wavelets auch noch eine zeitliche Länge T bzw. Ta, Tb auf. (siehe Figur 10). Typischer Weise wird daher das Sensorsystem mit einer Systemperiode der Periodenlänge (T, Ta, Tb) oder einer gemeinsamen Systemperiodendauer, die ein kleinstes gemeinsames Vielfaches dieser Periodenlängen ist. Die Periodenlänge (T, Ta, Tb) braucht dabei nicht für jede Periode gleich sein. Auch kann die Periodenlänge (T, Ta, Tb) einen beliebigen Wert haben, der den Wert unendlich einschließt und von der Periodenlänge 0 verschieden ist. Bevorzugt erzeugt der Wavelet-Generator (WG) n x m aus dem Ur-Wavelet generierte periodische Tochter-Wavelets $(s_{i,j}(t), \; si,j_{i,j\_a}(t) \; si,j_{i,j\_b}(t)$ mit 1<i<n, 1<j<m) oder zumindest eine Teilmenge dieser Tochter-Wavelets $(s_{i,j}(t), \; s_{i,j\_a}(t), \; s_{i,j\_b}(t)$ mit 1<i<n, 1<j<m), die beispielsweise gegenüber dem jeweiligen Ur-Wavelet $(s_{1,1}(t), \; s_{1,1\_a}(t) \; s_{1,1\_b}(t))$ zeitlich um einen Faktor gestaucht oder gestreckt sind. Dieser Faktor kann beispielsweise der Faktor 1/j oder j, aber auch 1 oder eine reelle Zahl sein. Gleichzeitig können die Tochter-Wavelets um einen zweiten Faktor gegenüber dem korrespondierenden Wavelet $s_{1,j}(t)$ bzw. $s_{1,j\_a}(t)$ bzw. $s_{1,j\_b}(t)$ verzögert sein. Dieser zweite Faktor kann unter anderem beispielsweise der Faktor (n-1)*T/j bzw. (n-1)*Ta/j bzw. (n-1)*Tb/j oder (n-1)*T*j bzw. (n-1)*Ta*j bzw. (n-1)*Tb*j sein. Ein alternativer zweiter Faktor wäre beispielsweise der Faktor (n-1)*T bzw. (n-1)*Ta bzw. (n-1)*Tb.

Die Tochter-Wavelet-Periode kann bevorzugt ebenfalls angepasst werden. Eine typische Tochter-Wavelet-Periode hat beispielsweise eine Periodenlänge von P/j bzw. von Pa/j bzw. von Pb/j oder P*j bzw. Pa*j bzw. bzw. Pb*j. Hinsichtlich der Theorie der Wavelets sei hier, wie auch anderer Stelle, auf die einschlägige Literatur, beispielsweise Stephane Mallat, "A Wavelet Tour of Signal Processing" Academic Press London 1997 verwiesen. Dies sind also nur Beispiele der vielfältigen möglich Wavelets, die hier denkbar sind.

Ein wesentliches Element des Sensorsystems ist die Verarbeitungseinheit, die die notwendige Linearform (LF) erzeugt. Mit Hilfe der jeweils stets gleichartigen Linearform (LF) wird durch die Verarbeitungseinheit das Verarbeitungszwischensignal, welches das Empfängerausgangssignal oder das kompensierte Empfängerausgangssignal umfasst, mit jeweils einem der Wavelets $(s_{i,j}(t) \; s_{i,j\_a}(t))$ verknüpft (Verknüpfung). Das Ergebnis dieser n x m möglichen Verknüpfungen ist eine erste Regelwert-Matrix $YI_1$ in Form der ersten Regelwert-Signale $yi_{1\_i,j}$. In den Zeichnungen ist als Ausgang der Linearform stets nur das Regelwert-Signal $yi_{i,j}(t)$ als $YI_{i,j}(t)$ eingezeichnet. Dieses repräsentiert eine oder mehrere der hier und im Folgenden erläuterten möglichen Regelwert-Signale $yi_{1\_i,j}$ bis $yi_{6\_i,j}$.

Eine bevorzugte alternative Form der Verknüpfung, die ebenfalls eine Linearform ist, ist eine einfache Multiplikation. Die Verarbeitungseinheit verknüpft mit Hilfe einer Multiplikation das Verarbeitungszwischensignal mit jeweils einem der Wavelets $s_{i,j}(t)$. Das Ergebnis dieser n x m möglichen Verknüpfungen ist wieder eine zweite Regelwert-Matrix $YI_2$ $(YI_{2\_i,j})$ in Form der zweiten Regelwert-Signale $yi_{2\_i,j}(t)$.

Eine bevorzugte Erweiterung dieser Methode ist die Bildung der Linearform mit Hilfe jeweils einer Multiplikation gefolgt von einer Filterung oder Integration. Dabei wird zunächst das Verarbeitungszwischensignal mit jeweils einem der besagten Wavelets $s_{i,j}(t)$ multipliziert und anschließend mittels eines Filters, insbesondere eines Tiefpasses, gefiltert oder mittels eines Integrators integriert. Dabei ist das Ergebnis dieser n x m möglichen Verknüpfungen wieder eine dritte Regelwert-Matrix $YI_3$ $(YI_{3\_i,j})$ in Form der dritten Regelwert-Signale $yi_{3\_i,j}(t)$.

Genaugenommen ist die zuvor beschriebene Form nichts anderes als ein Skalar-Produkt. Somit kann auch mit Hilfe jeweils eines stets gleichartigen Skalar-Produkts das Verarbeitungszwischensignal (Empfängerausgangssignal oder das kompensierte Empfängerausgangssignal) mit jeweils einem der Wavelets $s_{i,j}(t)$ verknüpft werden. In diesem Falle ist das Ergebnis dieser n x m möglichen Verknüpfungen eine vierte Regelwert-Matrix $YI_4$ $(YI_{4\_i,j})$ in Form der vierten Regelwert-Signale $yi_{4\_i,j}$ $(yi_{4\_i,j}(t))$.

Als vorletztes sei an dieser Stelle nochmals erwähnt, dass bevorzugt jeweils ein stets gleichartiger Korrelationsfilter das Verarbeitungszwischensignal wiederum mit jeweils einem der Wavelets $s_{i,j}(t)$ verknüpfen kann. Das Ergebnis dieser n x m möglichen Verknüpfungen ist in diesem Falle eine fünfte Regelwert-Matrix $YI_5$ $(YI_{5\_i,j})$ in Form der fünften Regelwert-Signale $yi_{5\_i,j}$ $(yi_{5\_i,j}(t))$.

Als letztes sei an dieser Stelle nochmals erwähnt, dass bevorzugt jeweils ein stets gleichartiger Matched-Filter das Verarbeitungszwischensignal (Empfängerausgangssignal oder das kompensierte Empfängerausgangssignal) mit jeweils einem der Wavelets $s_{i,j}(t)$ verknüpfen kann. Hierbei müssen die Wavelets $s_{i,j}(t)$ allerdings vordefiniert sein. Der Matched-Filter ist also jeweils so konstruiert, dass er nur das jeweilige Wavelet $s_{i,j}(t)$ (oder dessen Zusammenstellungen) durchlässt und die anderen Wavelets (oder Zusammenstellungen) derselben sperrt. Das Ergebnis dieser n x m möglichen Verknüpfungen ist in diesem Falle eine sechste Regelwert-Matrix $YI_6$ ($YI_{6\_i,j}$) in Form der sechsten Regelwert-Signale $yi_{6\_i,j}$ ($yi_{6\_i,j}(t)$).

Wie oben bereits mehrfach ausgeführt, ist es in der Praxis typischer Weise nicht notwendig, dass alle möglichen n x m Verknüpfungen oder n x m Multiplikationen oder n x m Skalar-Produkte etc. notwendiger Weise tatsächlich ausgeführt werden müssen. So ist typischer Weise auch nicht jeder der n x m möglichen Korrelationsfilter vorhanden. Es kann also sein, dass einzelne der n x m Signale zu Null gesetzt werden oder weggelassen werden.

Zur Vereinfachung wird im Folgenden allgemein von $yi_{i,j}$ oder $yi_{i,j}(t)$ gesprochen, wobei beide Bezeichnungen das gleiche bezeichnen. Es ist damit stets eine der zuvor beschriebenen Formen $yi_{1\_i,j}$, $yi_{2\_i,j}$, $yi_{3\_i,j}$, $yi_{4\_i,j}$, $yi_{5\_i,j}$, $yi_{6\_i,j}$ oder eine Kombination derselben gemeint, ohne diese näher zu spezifizieren. Dies betrifft auch die Ansprüche.

Ebenso wird zur weiteren Vereinfachung im Folgenden allgemein von $YI_{i,j}$ gesprochen. Es ist damit stets eine der zuvor beschriebenen Signalmatrizen $YI_1$, $YI_2$, $YI_3$, $YI_4$, $YI_5$, $YI_6$ oder eine Kombination derselben gemeint, ohne diese näher zu spezifizieren. Dies betrifft auch die Ansprüche.

In vielen technischen Realisierungen kommt es vor, dass das erfindungsgemäße Sensorsystem einen ersten Speicher (ME1) einschließt, der bevorzugt mindestens eines der Regelwert-Signale ($yi_{i,j}$) für zumindest einen Speicherzeitpunkt ($t_n$) enthält. Die gespeicherten Regelwert-Signale $yi_{i,j}(t_n)$ (auch als $yin_{i,j}$ bezeichnet) sind in der gespeicherten Regelwert-Matrix $YI_{i,j}(t_n)$, die im Folgenden auch als $YIn_{i,j}$ bezeichnet wird, zusammengefasst.

Eine andere Realisierung weist bevorzugt mindestens einen ersten Integrator (INT1) auf, der mindestens eines der Regelwert-Signale ($yi_{i,j}(t)$) und/oder mindestens eines der gespeicherten Regelwert-Signale $yi_{i,j}(t_n)$ integriert oder eine äquivalente Funktion ausführt. Dessen Ausgangssignalmatrix $XI_{i,j}$ wird im Folgenden auch als Matrix der integrierten Regelwert-Signale $xi_{i,j}(t)$ der ersten Integrationseinheit INT1 bezeichnet. Der Integrator hat dabei typischerweise die Aufgabe, die Regelfehler zu minimieren.

In einer weiteren bevorzugten Realisierung weist das erfindungsgemäße System mindestens einen zweiten Speicher (ME2) auf, der beispielsweise mindestens eines der Regelwert-Signale ($yi_{i,j}$) und/oder eines der gespeicherten Regelwert-Signale ($yi_{i,j}(t_n)$) und/oder eines der integrierten Regelwert-Signale ($xi_{i,j}(t)$) für zumindest einen Speicherzeitpunkt ($t_m$) enthält.

Der erfindungsgemäße Schätzer, der das erfindungsgemäße System von den Systemen im Stand der Technik unterscheidet, kann verschiedene Eingangssignale haben. Eines dieser Eingangssignale kann beispielsweise sein:

- ein gespeichertes Regelwert-Signal ($yi_{i,j}(t_n)$) (Ausgangssignal), das zu einem Speicherzeitpunkt $t_n$ in der ersten Speichereinheit ME1 gespeichert wird,

- ein integriertes Regelwert-Signal ($xi_{i,j}(t)$) als Ausgangssignal der ersten Integrationseinheit INT1,

- ein Ausgangssignal (Regelwert-Signal) ($zi_{i,j}(t_m)$) des zweiten Speichers ME2, das zu einem Speicherzeitpunkt $t_m$ in dem zweiten Speicher ME2 gespeichert wird.

In einer bevorzugten Ausführungsform des erfindungsgemäßen Systems werden die Eingangssignale des Schätzers weiterverarbeitet, bevor sie der Rücktransformations-Einheit zugeführt werden. Von den Eingangssignalen kann beispielsweise eines oder mehrere in einem zweiten Integrator (INT2) integriert werden. Diese integrierte Ausgangssignale $inf_{i,j}(t)$ des Filters sind wiederum Teil der integrierten Ausgangssignalmatrix $INF_{i,j}$ der zweiten Integratoreinheit (INT2). Auch diese zweite Integratoreinheit (INT2) hat typischerweise die Aufgabe, den Regelfehler zu minimieren.

In einer weiteren bevorzugten Ausführungsform des Sensorsystems wird beispielsweise eines der Schätzer-Eingangssignale und/oder eines der integrierten Ausgangssignale ($inf_{i,j}(t)$) der zweiten Integratoreinheit (INT2) durch einen Verstärker (V) verstärkt. Dessen Ausgangssignale ($S4_{i,j}(t)$) sind wiederum Teil der Ausgangssignalmatrix der Verstärkereinheit V, bevor sie zur Rücktransformations-Einheit gelangen.

In einer besonderen Ausführung des erfindungsgemäßen Systems weist das System neben dem Schätzer auch einen nicht-linearen Filter (NLF) auf. Dessen Ausgangssignale $nf_{i,j}(t)$ sind Teil der Ausgangssignalmatrix $NF_{i,j}$ des nichtlinearen Filters (NLF). Anstelle der Schätzer-Eingangssignale werden dann typischerweise die Ausgangssignale $nf_{i,j}(t)$ in dem zweiten Integrator (INT2) und/oder dem Verstärker (V) weiterverarbeitet.

Die Rücktransformations-Einheit des erfindungsgemäßen Sensorsystems umfasst in einer bevorzugten Ausführungsform eine Senderücktransformation (SRT) mittels der das Speisesignal (S5) des Senders (H) erzeugt wird. Ein Multiplikator ($M5_{ij}$) (Multipliziereinheit) multipliziert ein mit einer Filterfunktion (f()) in einem Filter gefiltertes Ausgangsignal des nicht-linearen Filters mit einem zugeordneten Wavelet $s6_{i,j\_5}(t)$ zu einem Rohsendesignal ($F_{i,j\_5}(t)$). Das Ausgangssignal des nicht-linearen Filters kann integriert und/oder verstärkt sein. Die Wavelets können beispielsweise verzögert sein. Ein zweiter Summierer ($\Sigma2$) erzeugt bevorzugt aus allen diesen Rohsendesignalen ($F_{i,j\_5}(t)$) durch Summierung das Speisesignal (S5). Es ist für den Fachmann offensichtlich, dass in dem Fall, wenn die Filterfunktion (f()) eine Konstante für ein einzelnes zugeordnetes Wavelet $s6_{i,j\_5}(t)$ liefert, und alle anderen zugeordneten Wavelets $s6_{k,l\_5}(t)$, mit $k{\neq}i$ oder $l{\neq}j$, gleich null gesetzt werden, das Sendesignal S5 gleich dem jeweiligen zugeordneten Wavelet $s6_{i,j\_5}(t)$ ist.

Bevorzugt können also folgende Signale in der Senderücktransformation (SRT) verarbeitet werden:
Ein Eingangssignal ($S4_{i,j}(t)$) des Filters ($f()$) der Senderücktransformation SRT kann das Verstärkerausgangssignal und/oder das integrierte Ausgangssignal und/oder das Schätzer-Eingangssignal oder das Ausgangssignal des Filters bzw. des nicht-linearen Filters (NLF) sein. Das jeweils gefilterte Signal ($S6_{i,j\_5}(t)$) wird dem Multiplikator ($M5_{ij}$) zugeführt. Hier wird es mit einem zugeordneten Wavelet ($s_{i,j}(t)$, $s_{i,j\_b}(t)$ oder verzögerten Wavelet ($S_{i,j\_5}(t)$) (bei Vorhandensein des zusätzlichen nicht-linearen Filters) multipliziert.

Es wird das Rohsendesignal ($F_{i,j\_5}(t)$), auch Speisevorsignal genannt, gebildet. Die Rohsendesignale werden in dem Summierer ($\Sigma 2$) zu dem Speisesignal (S5) des Senders summiert.

Die Filterfunktion ($f()$) kann für ein oder mehrere der Ausgangssignale, unabhängig von dem Eingangssignal des Filters (Verstärkerausgangssignal ($S4_{i,j}(t)$), integriertes Ausgangssignal ($inf_{i,j}(t)$), Schätzer-Eingangssignal ($zi_{i,j}(t)$), Ausgangssignal des nicht-linearen Filters ($nf_{i,j}(t)$)), dabei ausdrücklich auch eine Konstante sein. Auch müssen nicht alle Rohsendesignale ($F_{i,j\_5}(t)$) gebildet werden. Dies kann bedeuten, dass sie auf einen festen Wert, beispielsweise 1 oder 0, gesetzt oder weggelassen werden können.

Ähnliches gilt für die Erzeugung des Kompensatorspeisesignals (S3). Die Rücktransformations-Einheit umfasst in diesem Fall bevorzugt eine Kompensationsrücktransformation (KRT) mit einer dritten Multiplizereinheit ($M3_{ij}$).

In einer weiteren bevorzugten Ausführungsform des Sensorsystems umfasst die Rücktransformations-Einheit die Kompensationsrücktransformation (KRT) mittels der das Kompensationssendesignal (S3) des Kompensators erzeugt wird.

Die der Senderrücktransformation (SRT) entsprechende Kompensationsrücktransformation (KRT) umfasst bevorzugt die dritte Multiplizereinheit ($M3_{ij}$), die bevorzugt eines der obengenannten Signale nach Filterung in einem Filter mit einer Filterfunktion ($g()$) mit einem zugeordneten Wavelet-Signal $s_{i,j}(t)$ zu einem Rohkompensationssignal ($F_{i,j\_3}(t)$) multipliziert. Die jeweiligen Rohkompensationssignale ($F_{i,j\_3}(t)$) werden als Ausgangssignale in einem (ersten) Summierer ($\Sigma 1$) zu dem Kompensationssendesignal (S3) summiert.

Bevorzugt wird also in der dritten Multiplizereinheit ($M3_{ij}$) der Kompensationsrücktransformation (KRT) ein mit einer Filterfunktion ($g()$) gefiltertes Eingangssignal mit je einem zugeordneten Wavelet-Signal ($s_{i,j}(t)$) zu dem Rohkompensationssignal $F_{i,j\_3}(t)$ multipliziert. Der erste Summierer ($\Sigma 1$) erzeugt aus allen diesen Rohkompensationssignalen ($F_{i,j\_3}(t)$) durch Summierung das Kompensationssendesignal (S3). Als Eingangssignal des Filters wird das Schätzereingangssignal ($zi_{i,j}(t)$) und/oder das Verstärkerausgangssignal ($S4_{i,j}(t)$) und/oder das integrierte Ausgangssignal des zweiten Integrators ($inf_{i,j}(t)$) und/oder Ausgangssignal des nicht-linearen Filters ($nfi,j(t)$) verwendet.

Die Filterfunktion $g()$ kann dabei ausdrücklich auch eine Konstante bilden, so dass das Ausgangssignal (S6) je eine Konstante ist. Auch müssen nicht alle Rohkompensationssignale ($F_{i,j\_3}(t)$) gebildet werden. Dies kann bedeuten, dass sie auf einen festen Wert, beispielsweise 1 oder 0, gesetzt oder weggelassen werden können.

Selbstverständlich kann die Rücktransformations-Einheit des erfindungsgemäßen Sensorsystems sowohl die Senderrücktransformation (SRT) als auch die Kompensationsrücktransformation (KRT) umfassen.

In einer weiteren bevorzugten Ausführungsform des erfindungsgemäßen Sensorsystems mit einem optionalen zusätzlichen nicht-linearen Filter (NLF) steuert der nicht-lineare Filter (NLF) zumindest die Verzögerung eines der Wavelets ($s_{i,j}(t)$) zu zumindest einem verzögerten ersten Wavelet ($s_{i,j\_s}(t)$) durch eine erste Verzögerungsvorrichtung ($\Delta t1$) und/oder die Verzögerung mindestens eines der Wavelets ($s_{i,j}(t)$) zu zumindest einem verzögerten zweiten Wavelets ($s_{i,j\_3}(t)$) durch eine zweite Verzögerungsvorrichtung ($\Delta t2$). Statt einer Verzögerungseinrichtung kann es sich dabei bevorzugt jeweils auch um einen Phasenschieber handeln. Daher wird der Begriff "Verzögerungseinrichtung" im Folgenden als Synonym für eine Einrichtung verwendet, die eine gesteuerte Verzögerung und/oder eine gesteuerte Phasenschiebung verursacht. Diese Verwendung gilt auch für die Ansprüche.

In einer weiteren bevorzugten Ausführungsform des erfindungsgemäßen Sensorsystems wird mindestens ein Speisesignal (S5) und/oder mindestens ein Kompensationssendesignal (S3) mit einem Offset versehen.

In einer weiteren bevorzugten Ausführungsform des Sensorsystems befindet sich mindestens ein linearer Filter und/oder mindestens ein erster Integrator (INT1) im Signalpfad nach der Verarbeitungseinheit (LF) mit der Linearform und bevorzugt vor dem Eingang des Schätzers und weiter bevorzugt vor dem optionalen nicht-linearen Filter (NLF).

In einer weiteren bevorzugten Ausführungsform des Systems befindet sich mindestens ein linearer Filter und/oder mindestens ein zweiter Integrator (INT2) im Signalpfad hinter dem ersten Integrator (INT1) und bevorzugt hinter dem optionalen nicht-linearen Filter (NLF). Die Komponenten sind jedenfalls nicht vor dem Eingang des Schätzers angeordnet.

Im Rahmen der Erfindung wurde erkannt, dass - im Gegensatz zum Stand der Technik - die Position der linearen Elemente nicht mehr beliebig längs der Signalkette verschoben werden kann. Vielmehr hängt deren Wirkung im erfindungsgemäßen Sensorsystem von der Positionierung vor oder hinter dem Eingang des Schätzers bzw. dem optionalen nicht-linearen Filter (NLF) ab. In der Regel ist jedoch eine Verschiebung längs des Signalpfades zwischen Empfänger und Eingang des Schätzers und/oder dem Eingang des optionalen nichtlinearen Filters (NLF) für lineare Verarbeitungskomponenten möglich. Analog ist dies auch für lineare Verarbeitungskomponenten, die zwischen dem Eingang des Schätzers bzw. dem optionalen nicht-linearen Filter (NLF) auf der einen Seite und dem Sender (H) oder dem Kompensator (K) auf der anderen Seite liegen, möglich. Für einen Fachmann wird eine Minimierung des Realisierungsaufwands bei der Positionierung ausschlaggebend sein.

In einer weiteren bevorzugten Ausführungsform des erfindungsgemäßen Sensorsystems ist die Dimension der n x m Matrizen, beispielsweise $S_{i,j}$, $Yl_{i,j}$, $Yln_{i,j}$, $Xl_{i,j}$, $Zl_{jj}$, $NF_{i,j}$, $INF_{i,j}$, $S4_{i,j}$, etc., entweder

n mindestens 2 und m mindestens 1 oder
n mindestens 1 und m mindestens 2 oder
n mindestens 1 und m mindestens 1.

Im letzteren Fall muss jedoch ein Zeitmultiplex statt des bisher beschriebenen Raummultiplexes verwendet werden.

In einer weiteren bevorzugten Ausführungsform des erfindungsgemäßen Sensorsystems kann der optionale nicht-lineare Filter (NLF) durch mindestens ein Signal mindestens einer der besagten Regelwert-Matrizen $Yl_{1\_i,j}$, $Yl_{2\_i,j}$, $Yl_{3\_i,j}$, $Yl_{4\_i,j}$, $Yl_{5\_i,j}$, $Yl_{6\_i,j}$ und/oder mindestens einer der daraus abgeleiteten Matrizen $Yln_{i,j}$, $Xl_{i,j}$, $Zl_{i,j}$, $M_{ref\_i,j}$ mittels des Schätzers (EST) gesteuert werden. Bei der Signalmatrix $M_{ref\_i,j}(t)$ handelt es sich um eine Matrix mit abgespeicherten Werten mindestens einer der Regelwert-Matrizen $Yl_{1\_i,j}$, $Yl_{2\_i,j}$, $Yl_{3\_i,j}$, $Yl_{4\_i,j}$, $Yl_{5\_i,j}$, $Yl_{6\_i,j}$ und/oder mindestens einer der daraus abgeleiteten Matrizen $Yln_{i,j}$, $Xl_{i,j}$, $Zl_{i,j}$. Die Speicherung erfolgt in dem Referenzspeicher MRef. In dem Referenzspeicher werden Referenzwerte dieser Matrizen abgespeichert, die aus einer Referenzmessung mit einem Referenzsender (R) gewonnen wurden.

In einer weiteren bevorzugten Ausführungsform des erfindungsgemäßen Sensorsystems ermittelt ein Schätzer auf Basis mindestens eines Signals mindestens einer der Regelwert-Matrizen $Yl_{1\_i,j}$, $Yl_{2\_i,j}$, $Yl_{3\_i,j}$, $Yl_{4\_i,j}$, $Yl_{5\_i,j}$, $Yl_{6\_i,j}$ und/oder mindestens einer der daraus abgeleiteten Matrizen, insbesondere $Yln_{i,j}$, $Xl_{i,j}$, $Zl_{i,j}$, $M_{ref\_i,j}$, die wahrscheinlichen Zeitpunkte des Eintreffens der Eingangssignalanteile (S0e(t)) des Empfängerausgangssignals (S0(t)) und/oder der korrespondierenden Ausgangsignalanteile (S1e(t)) des kompensierten modifizierten Empfängerausgangssignals (S1(t)). Diese ermöglichen eine Aussage über die Entfernung zu einem Objekt.

In einer weiteren bevorzugten Ausführungsform des erfindungsgemäßen Sensorsystems wird das Speisesignal (S5) durch gewichtete oder ungewichtete Summierung aus den Wavelets $s_{i,j}(t)$ erzeugt oder kann aus diesen erzeugt werden.

In einer weiteren bevorzugten Ausführungsform weist das Sensorsystem einen Referenzsender (R) auf, der zumindest zeitweise mit dem Speisesignal (S5) gespeist wird und zumindest zeitweise ein Referenzsignal (S11) direkt zu dem Empfänger sendet. Dieses Referenzsignal (S11) wird bevorzugt am Empfänger (D) als Referenzempfangssignal (S0r(t)) empfangen und in der Verarbeitungseinheit (LF) weiterverarbeitet. Dabei wird in einem Speicher $MRef_{i,j}(t)$ bevorzugt zumindest ein Signal (Regelwert-Signal) mindestens einer der Matrizen $Yl_{i,j}$, (auch $Yl_{1\_i,j}$, $Yl_{2\_i,j}$, $Yl_{3\_i,j}$, $Yl_{4\_i,j}$, $Yl_{5\_i,j}$, $Yl_{6\_i,j}$), $Yln_{i,j}$, $Xl_{i,j}$ oder $Zl_{i,j}$ als Referenzinformation abgelegt. Die Zurverfügungstellung von $Zl_{i,j}$ ist zur Vereinfachung in den Zeichnungen nicht aufgeführt.

In einer weiteren bevorzugten Ausführungsform des erfindungsgemäßen Sensorsystems wird das Referenzempfangssignal (S0r(t)) in der Verarbeitungseinheit weiterverarbeitet. Bevorzugt wird mindestens eine der Regelwert-Matrizen $Yl_{1\_i,j}$, $Yl_{2\_i,j}$, $Yl_{3\_i,j}$, $Yl_{4\_i,j}$, $Yl_{5\_i,j}$, $Yl_{6\_i,j}$ $Yln_{i,j}$, $Xl_{i,j}$, $Zl_{i,j}$ in mindestens einem Referenz-Speicher MRef der Verarbeitungseinheit zumindest teilweise abgespeichert. Die Speicherung erfolgt bevorzugt wenigstens für einen vorgegebenen Zeitraum. Bevorzugt werden wenigstens einige der Regelwert-Signale mindestens einer der Regelwert-Matrizen zur Kompensation der spezifischen Übertragungseigenschaften des Senders und des Empfängers verwendet, wobei auch die gerätespezifischen Eigenschaften kompensiert werden können.

Bevorzugt weist die Verarbeitungseinheit des Sensorsystems eine Speichereinheit (ME1, ME2, MRef) auf, in der Werte mindestens einer der Regelwert-Matrizen $Yl_{1\_i,j}$, $Yl_{2\_i,j}$, $Yl_{3\_i,j}$, $Yl_{4\_i,j}$, $Yl_{5\_i,j}$, $Yl_{6\_i,j}$ $Yln_{i,j}$, $Xl_{i,j}$, $Zl_{i,j}$ gespeichert werden. Gleichzeitig kann die Speichereinheit bevorzugt mindestens einen dieser Werte mindestens einer der Regelwert-Matrizen in einer zeitlichen Tiefe von mehr als einem Wert speichern.

In einer weiteren bevorzugten Ausführungsform des Sensorsystems wird mindestens eine der Regelwert-Matrizen $Yl_{1\_i,j}$, $Yl_{2\_i,j}$, $Yl_{3\_i,j}$, $Yl_{4\_i,j}$, $Yl_{5\_i,j}$, $Yl_{6\_i,j}$ und/oder eine der Matrizen $Yln_{i,j}$, $Xl_{i,j}$, $Zl_{i,j}$ in einer Echo-Auswerteeinheit derart weiterverarbeitet, dass die Echoanteile des Empfangssignals oder ein Echo-Zeitsignal bestimmt werden. Dabei kann auch das Echo-Zeitsignal ausgegeben oder weiterverarbeitet werden, bevorzugt um daraus die Entfernung zu einem Objekt zu bestimmen.

In einer weiteren bevorzugten Ausführungsform des Sensorsystems wird auf dieser Grundlage auf das Vorhandensein weiterer Objekte geschlossen, deren Entfernung bevorzugt aber nicht bestimmt wird. Dies kommt immer dann zum Tragen, wenn die Objektortungskapazität des Systems bereits ausgeschöpft ist. Alternativ können auch die Entfernungen zu mehreren Objekten bestimmt werden.

In einer bevorzugten Ausführungsform stellen die verwendeten Wavelets $s_{i,j}(t)$ aus jeweils einem ersten monofrequenten Signal und einem dazu um 90° phasenverschobenen zweiten monofrequenten Signal dar.

Außerdem kann der Empfänger (D) bevorzugt eine Avalanche-Diode sein, deren Empfängerausgangssignal S0(t) durch Modulation der Sperrspannung auf eine vorbestimmte Zwischenfrequenz gewandelt wird. Es ist offensichtlich, dass es in diesem Fall vorteilhaft ist, wenn die Wavelets $s_{i,j}(t)$, die für die Linearform (LF) verwendet werden, bevorzugt auf die Zwischenfrequenz, die sich auf Basis des Speisesignals (S5) und der Modulationsfrequenz ergibt, abgestimmt sind.

In einer weiteren bevorzugten Ausführungsform des erfindungsgemäßen Sensorsystems ist der Empfänger eine Drift-Field-Fotodiode, in der ein Element der Verarbeitungseinheit integriert ist. Bevorzugt ist eine Multiplikation als Teil der Linearform der Verarbeitungseinheit (LF) in der Drift-Field-Diode umfasst.

Zum besseren Verständnis wird die vorliegende Erfindung nochmals anhand der Figuren 5 bis 19 erläutert. Die hier dargestellten Besonderheiten können jedoch auch einzeln und in einer anderen Kombination und Zusammensetzung verwendet werden. Es müssen nicht alle in den Figuren dargestellten Elemente und Komponenten in bevorzugten Ausführungsformen vorhanden sein. (In den Figuren werden die Signale teilweise mit Großbuchstaben bezeichnet, während sie in der Beschreibung mit Kleinbuchstaben bezeichnet sind, um sie von den Matrizen zu unterscheiden und das Verständnis zu fördern.)

Figur 5 zeigt ein Beispiel einer erweiterten erfindungsgemäßen Vorrichtung, die neben den aus dem Stand der Technik bekannten Komponenten auch zusätzlich einen Schätzer (EST) und einen Referenzspeicher (MRef) aufweist. Darüber hinaus ist im Signalpfad hinter der Verarbeitungseinheit (LF), die die Linearform umfasst, eine Speichereinheit (ME1), eine optionaler Integrator (INT1) und ein weiterer Speicher (ME2) angeordnet. Durch Speicherung und Integration werden die Regelwertsignale $yi_{i,j}$ entsprechend umgewandelt, so dass am Ende dieser Signal-Teilstrecke, also am Ausgang der zweiten Speichereinheit (ME2) die Ausgangssignale $zi_{i,j}(t)$ zur Verfügung stehen. Diese Signale werden dem Schätzer zugeführt.

Die Signale $zi_{i,j}(t)$ werden darüber hinaus auch weiterverarbeitet, um das Speisesignal (S5) für den Sender (H) zu generieren und das Kompensatorspeisesignal (S3) für den Kompensator (K) zu generieren. Dies geschieht in der Rücktransformations-Einheit, die die Senderücktransformation (SRT) und die Kompensationsrücktransformation (KRT) umfasst. Bevor die Ausgangssignale $zi_{i,j}(t)$ der zweiten Speichereinheit zu der Rücktransformations-Einheit gelangen, können sie bevorzugt mittels eines optionalen Integriergliedes (INT2) und gegebenenfalls über einen ebenfalls optionalen Verstärker (V) weiterverarbeitet werden.

Die beiden Speichereinheiten (erster Speicher (ME1) und zweiter Speicher (ME2)) werden durch eine Steuereinheit (CRT) bedarfsgerecht angesteuert.

Der Referenzspeicher (MRef) wird mit dem integrierten Regelwertsignal $xi_{i,j}$ gespeist. Seine Funktion und die Erzeugung der dort abgelegten Regelwert-Signale werden später noch erläutert. Die im Referenzspeicher (MRef) abgespeicherten Signale werden dann an den Schätzer (EST) übergeben und dort gemeinsam mit den Ausgangssignalen der zweiten Speichereinheit (ME2) verarbeitet, um das Echo-Informationssignal zu erzeugen, aus dem auf die Entfernung eines Objekts zu dem Sensorsystem geschlossen werden kann.

Eine Signalerzeugungs-Einheit umfasst den Wavelet-Generator (WG), der wenigstens ein Wavelet-Basissignal $s_{i,j}(t)$ erzeugt und in das System einspeist. Das Wavelet-Signal $s_{i,j}(t)$ wird zum einen der Verarbeitungseinheit (LF) mit der Linearform zugeführt. Darüber hinaus wird es auch der Senderücktransformationseinheit (SRT) und der Kompensationsrücktransformationseinheit (KRT) zugeführt. Somit lässt sich sowohl der Kompensationssender (K) wie auch der Sender (H) regeln, um das System auszuregeln und einen stabilen Zustand zu erzeugen. Ziel ist es, das am Empfänger (D) nur noch ein Gleichsignal, bevorzugt ein Nullsignal anliegt. Hierbei sind Regelfehler und ein Signalrauschen zu vernachlässigen. Es wird darauf hingewiesen, dass das System auch nur den Sender (H) und das Senderspeisesignal (S5) oder nur das Kompensationsspeisesignal (S3) und den Kompensationssender (K) regeln kann. In dem gezeigten Beispiel werden jedoch bevorzugt beide Signale gleichzeitig geregelt.

Zur Erzeugung des Kompensatorspeisesignals (S3) wird das am Eingang der Rücktransformations-Einheit anliegende Signal ($S4_{i,j}$) einer Filtereinheit mit der Filterfunktion g() zugeführt. Nach Filterung mit diesem Kompensationsrücktransformationsfilter erfolgt eine Multiplikation mit dem Wavelet-Signal $s_{i,j}(t)$ in einer Multipliziereinheit $m3_{i,j}$. Dadurch entsteht das Rohkompensationssignal $f_{i,j\_3}(t)$. Dieses wird durch einen ersten Summierer ($\Sigma 1$) zum Kompensatorspeisesignal (S3) aufsummiert.

Die Erzeugung des Senderspeisesignals (S5) erfolgt analog. Das Eingangssignal ($S4_{i,j}$) wird in einer zweiten Filtereinheit mit der Filterfunktion f() gefiltert und anschließend in einer Multipliziereinheit ($M5_{i,j}$) mit einem Wavelet-Signal $s_{i,j}(t)$ multipliziert. Das so gebildete Rohsendesignal $f_{i,j\_5}(t)$ wird anschließend in einem zweiten Summierer ($\Sigma 2$) aufsummiert, wodurch das Senderspeisesignal (S5) entsteht.

Prinzipiell ist es auch denkbar, statt eines Wavelet-Generators WG bevorzugt einen ersten Wavelet-Generator WG und einen zweiten Wavelet-Generator WG_II zu verwenden, die beispiels- und vorzugsweise über eine Leitung (sync) miteinander synchronisiert sind. Dies ist insbesondere bei einer nichtlinearen Verzerrung der Kanäle oder des Empfangs durch den Empfänger von Vorteil. Hierzu sei auf die bereits beschriebene multiplizierende Überlagerung im Empfänger D verwiesen.

Dies ist nur ein bevorzugtes Beispiel für die Verwendung mehrerer Wavelet-Generatoren (WG, WG_II), deren Zahl nicht auf zwei beschränkt sein muss. Es ist beispielsweise auch denkbar, einen ersten Wavelet-Generator WG für die Ansteuerung eines Teils der Vorrichtung zu benutzen, die eine Linearform LF erstellt, einen zweiten Wavelet-Generator WG_II für die Erzeugung eines Kompensatorspeisesignals S3 zu verwenden, und einen dritten Wavelet-Generator WG_III für die Erzeugung eines Sendesignals S5 zu verwenden. Werden beispielsweise mehr als ein Sender H und/oder mehr als ein Detektor D und/oder mehr als ein Kompensationssender K mit zugehörigen Signalen verwendet, so sind bevorzugt noch mehr Wavelet-Generatoren denkbar.

Im Folgenden wird zur Vereinfachung im Wesentlichen nur der Fall mit einem Wavelet-Generator WG beschrieben.

Aus dem Stand der Technik ist es bekannt, dass es günstig ist, hinter der Linearform (Verarbeitungseinheit LF) eine Signalformung einzusetzen und so statt eines einfachen Proportionalreglers (P-Regler) beispielsweise einen Regler mit PI-Eigenschaften zu erhalten. Dies geschieht im Stand der Technik durch Einsatz eines Integrators. Im Gegensatz zum Stand der Technik ist es nun aber, wie bereits skizziert, nicht äquivalent, wo eine solche Signalformung durch Integration eingesetzt wird.

Sowohl die Signale $yi_{i,j}(t)$ der Ausgangssignalmatrix $YI_{i,j}$ der Linearform LF als auch die Signale $xi_{i,j}(t)$ der Ausgangssignalmatrix $XI_{i,j}$ der ersten Integrationseinheit INT1 können als Ausgangssignale des Systems zur weiteren Verarbeitung verwendet werden.

Es hat sich im Rahmen der Erfindung gezeigt, dass es günstig sein kann, nicht nur die aktuellen Werte der Signale $yi_{i,j}(t)$ der Ausgangssignalmatrix $YI_{i,j}$ der Linearform LF zu verwenden, sondern auch vergangene Werte der Signale $yi_{i,j}(t)$ zu einem oder mehreren früheren Zeitpunkten, z.B. bevorzugt auch um Ableitungen dieser Größen verwenden zu können. In Figur 5 ist beispielhaft eine bevorzugte zusätzliche erste Speichereinheit ME1 vorgesehen, die die Werte der Signale $yi_{i,j}(t)$ der Ausgangssignalmatrix $YI_{i,j}$ der Linearform LF zwischenspeichern kann. Spätestens an dieser Stelle ist es offensichtlich vorteilhaft und bevorzugt, zumindest einen Teil des Signalpfads digitalisiert und/oder insbesondere durch einen Signalprozessor zu realisieren. Insofern können bevorzugt mehrere oder alle der zuvor beschriebenen Funktionalitäten des Sensorsystems in einem einzelnen Regler CTR durchgeführt werden. In dem bevorzugten Beispiel von Figur 5 werden die Ausgangssignale $yi_{i,j}(t_n)$ der ersten Speichereinheit ME1 statt der Signale $yi_{i,j}(t)$ der Ausgangssignalmatrix $YI_{i,j}$ der Linearform LF als Eingangssignale der ersten Integrationseinheit INT1 verwendet. Natürlich ist es auch denkbar, diese direkt in den Schätzer einzuspeisen.

Andere bevorzugte Positionierungen solcher Speicher sind denkbar. So ist es beispielsweise, wie in Figur 5 dargestellt, auch möglich, eine zweite Speichereinheit ME2 vorzusehen, die bevorzugt die Werte der Signale $xi_{i,j}(t)$ der Ausgangssignalmatrix $XI_{i,j}$ der ersten Integrationseinheit INT1 zwischenspeichert. Die Signale $zi_{i,j}(t)$ der Ausgangssignalmatrix $ZI_{i,j}$ der bevorzugten zweiten Speichereinheit ME2 werden in dem Beispiel der Figur 5 statt der Werte der Signale $xi_{i,j}(t)$ der Ausgangssignalmatrix $XI_{i,j}$ der ersten Integrationseinheit INT1 dem Schätzer zugeführt.

Wie leicht zu erkennen ist, sind alle die zuvor diskutierten bevorzugten Variationen und Ausführungen nur einzelne Beispiele der möglichen Ausführungen der erfindungsgemäßen Vorrichtungen. Diese haben zumindest als Teilstruktur die Grundstruktur der Figuren 1 und 2 und den zusätzlichen Schätzer gemeinsam. Mehrere bevorzugte Sender H, Kompensationssender K und Empfänger D werden im zitierten Stand der Technik bereits ausführlich behandelt und sind in ihren speziellen Ausformungen ebenso wie die Kombinationen der zuvor diskutierten Elemente Teil dieser Offenbarung. Dies gilt auch für die folgenden beispielhaft beschriebenen Ausführungen.

Ganz zu Beginn wurde erwähnt, dass beispielsweise das Maximum der Signale $zi_{i,j}(t)$ gesucht werden kann und genau dieses als Echo-Informationssignal ausgegeben wird. Das Suchen des Maximums ist nur ein bevorzugtes Beispiel für eine von vielen Ausführungsformen des Schätzers. Die Maximumsuche wird beispielsweise mittels des erfindungsgemäßen Schätzers EST, also in einer Steuervorrichtung durchgeführt. Der Schätzer EST führt in der Regel Verfahren der statistischen Signaltheorie aus, um beispielsweise die Signale $yi_{i,j}(t)$, $yi_{i,j}(t_n)$, $xi_{i,j}(t)$, $zi_{i,j}(t)$ zu selektieren, die eine optimale Kompensation des Empfangssignals erlauben und eine Aussage zur Entfernung eines Objekts, einer Objekteigenschaft oder einer Eigenschaft der Übertragungsstrecke zu ermöglichen. Hier können auch neuronale Netzte, HMM-Erkenner (Hidden Markov Model), DTW-Erkenner (Dynamic-time-warping), Viterbi-Dekoder und Petri-Netze zum Einsatz kommen.

Somit ist der Schätzer EST ein Bestandteil der erfindungsgemäßen Vorrichtung und des erfindungsgemäßen Verfahrens, der sehr verschieden ausgeformt werden kann. Der bevorzugte Maximums-Schätzer und die darin verwirklichbare Methodik wurde bereits als eine mögliche Ausführungsform eines Schätzers beschrieben.

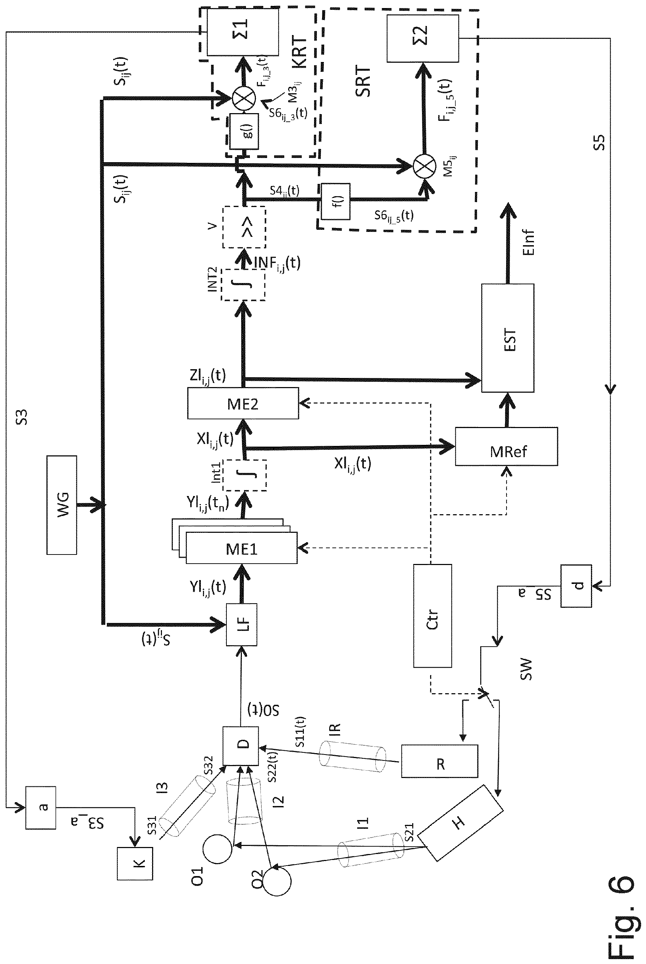

Der Schätzer wird bevorzugt nicht nur mit dem Regelwert-Signal $YI_{i,j}$ oder einem weiterverarbeiteten Regelwert-Signal, beispielsweise dem Signal $ZI_{i,j}$ beaufschlagt, sondern auch mit Werten aus einem Referenzspeicher MRef, der vorher abgespeicherte Regelwert-Signale umfasst und in dem diese Signale abgespeichert sind. In der Regel und bevorzugt werden in dem Schätzer dann die aktuellen Regelwertsignale mit den als Referenz abgespeicherten Regelwert-Signalen in Beziehung gesetzt, so dass beispielsweise der Maximumwert bei Ausführung des Schätzers als Maximumschätzer ermittelt werden kann und als Echo-Informationssignal ausgegeben werden kann. Anhand von Figur 6 wird nun erläutert, wie diese Referenzwerte gebildet werden.

Es ist nun denkbar, dass sich die Vorrichtung bevorzugt selbst vermisst, um eine Referenz zu bestimmen. Hierzu ist es beispielsweise denkbar, dass die Vorrichtung bevorzugt einen Referenzsender R umfasst, wie er beispielhaft in Figur 6 gezeigt ist. Der Referenzsender R strahlt bevorzugt über eine bekannte Referenzübertragungsstrecke IR überlagernd in den Empfänger D ein. Zur Selbstkalibration wird bevorzugt das unmittelbare Sendesignal S5_a vom Sender H auf den Referenzsender R, beispielsweise durch einen Schalter SW, umgeschaltet. Eine Ablaufsteuerung Ctr kontrolliert bevorzugt diesen Vorgang. Bevorzugt werden Werte der Signale, also bevorzugt die Signale $yi_{i,j}(t)$, $yi_{i,j}(t_n)$, $xi_{i,j}(t)$, $zi_{i,j}(t)$ der entsprechenden Matrizen $YI_{i,j}$, $YIn_{i,j}$, $XI_{i,j}$, $ZI_{i,j}$, in einem Referenzspeicher MRef zwischengespeichert. Der Schätzer EST kann nun bevorzugt diese zwischengespeicherten Referenzwerte verwenden, um beispielsweise den Untergrund durch Subtraktion oder Division zu eliminieren. Bevorzugt kann die Ablaufsteuerung Ctr zweckmäßiger Weise auch die Ansteuerung der anderen optionalen Speicher ME1, ME2 steuern. Selbstverständlich kann der Referenzsender R auch ohne die oder einige der Komponenten ME1, ME2, INT1, INT2, V, KRT, SRT, wie in den Figuren dargestellt, eingesetzt werden. Im weiteren Verlauf wird das Eliminieren des Untergrunds durch Division weiter unten erläutert werden.

Es wurde bereits erwähnt, dass bevorzugt ein System mit mehreren Wavelet-Generatoren denkbar ist. Ein spezielles System dieser Art umfasst zusätzlich einen nicht-linearen Filter und Verzögerungsglieder. Dieses System kann bevorzugt dadurch erzielt werden, dass der optionale nicht-lineare Filter NLF über ein, zwei oder eben mehr zusätzliche Ausgangsbusse verfügt, die die Verzögerungseinheiten für die Verzögerung der Signale $s_{i,j}(t)$ der Ausgangssignal-Matrix $S_{i,j}$ des Wavelet-Generators WG steuern. In der Figur 7 ist ein solches bevorzugtes System beispielhaft dargestellt. Der nicht-lineare Filter NLF verfügt zusätzlich über einen ersten Verzögerungssteuerbus $Dt_{i,j\_3}$ und einen zweiten Verzögerungssteuerbus $Dt_{i,j\_5}$. Es ist beispielsweise denkbar, dass der nicht-lineare Filter NLF sich bevorzugt in drei einzelne nicht-lineare Teilfilter mit je einem dieser Ausgangsbusse als Ausgang aufteilt. Für den Fachmann ist es offensichtlich, dass die Steuersignale $Dt_{i,j\_3}$ und $Dt_{i,j\_5}$ ggf. integriert und verstärkt werden können. Dies ist in den Zeichnungen zur besseren Übersichtlichkeit nicht eingetragen. Der nicht-lineare Filter wird bevorzugt über einen Steuersignal-Bus CTRS von dem Schätzer gesteuert.

Die Verzögerung bzw. Phasenregelung der Signale $s_{i,j}(t)$ der Ausgangssignal-Matrix $S_{i,j}$ des Wavelet-Generators WG für die Erzeugung des Sendesignals S5 wird in dem Beispiel bevorzugt in Abhängigkeit von dem zweiten Verzögerungssteuerbus $Dt_{i,j\_5}$ durch die erste Verzögerungseinheit $\Delta t1$ vorgenommen. Die somit verzögerten Basissignale $S_{i,j\_5}$ der Senderseite werden dann bevorzugt statt der Signale $s_{i,j}(t)$ der Ausgangssignal-Matrix $S_{i,j}$ des Wavelet-Generators WG der fünften Multipliziereinheit $M5_{ij}$ zugeführt.

Die Verzögerung bzw. Phasenregelung der Signale $s_{i,j}(t)$ der Ausgangssignal-Matrix $S_{i,j}$ des Wavelet-Generators WG für die Erzeugung des Kompensatorspeisesignals S3 wird in dem bevorzugten Beispiel analog in Abhängigkeit von dem ersten Verzögerungssteuerbus $Dt_{i,j\_3}$ durch die zweite Verzögerungseinheit $\Delta t2$ vorgenommen. Die somit verzögerten Basissignale $S_{i,j\_3}$ der Kompensationssenderseite werden dann statt der Signale $s_{i,j}(t)$ der Ausgangssignal-Matrix $S_{i,j}$ des Wavelet-Generators WG der jeweiligen dritten Multipliziereinheit $M3_{ij}$ zugeführt. Durch diese Konstruktion ist eine sehr feine Ausregelung des Regelkreises möglich.

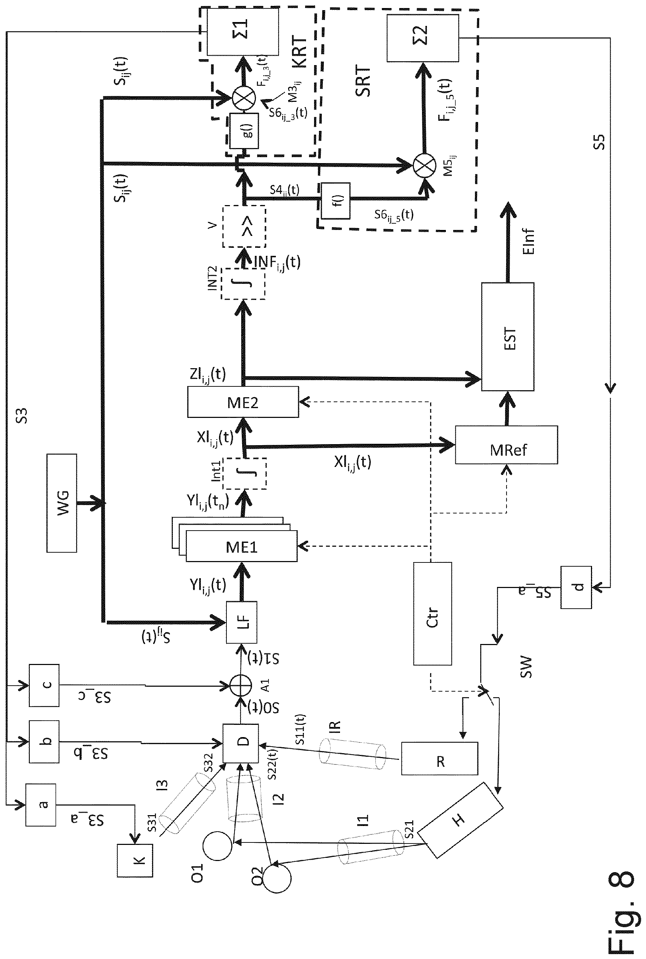

Wie bereits erwähnt, zeigen Figur 7 und 8 beispielhaft mehrere mögliche bevorzugte Alternativen der Kompensationseinspeisung, die einzeln oder in Kombination verwendet werden können. Die gestrichelt gezeichneten Komponenten (INT1, IN2, V) sind optional. Zur Vereinfachung sind KRT und SRT nicht genauer ausgeführt; hier wird auf die andere Figuren und die entsprechende Beschreibung verwiesen.

Neben der bereits besprochenen Kompensation über einen Kompensationssender K, der überlagernd in den Empfänger D einstrahlt, ist es bevorzugt auch denkbar, das Kompensationssignal S3 über einen Verstärker b in den Empfänger selbst einzuspeisen, wenn dessen Empfindlichkeit über ein Signal geändert werden kann. Die Verstärkung des Verstärkers b kann eins sein. Der Verstärker b kann über einen Offset verfügen.

Des Weiteren ist es möglich, bevorzugt das Kompensationssignal S3 über einen Verstärker c und einen Addierer A1 direkt in das Empfängerausgangssignal S0(t) oder an eine andere Stelle in der Regelschleife einzuspeisen. Die Verstärkung des Verstärkers c kann eins sein. Der Verstärker c kann über einen Offset verfügen.

Es ist natürlich in vielen Fällen sinnvoll, für jede oder einzelne der Rückkoppelmethoden bevorzugt eine separate Regelschleife mit einem separaten Kompensatorspeisesignal S3 aufzubauen. Dies ist hier aus Gründen der Übersichtlichkeit nicht dargestellt.

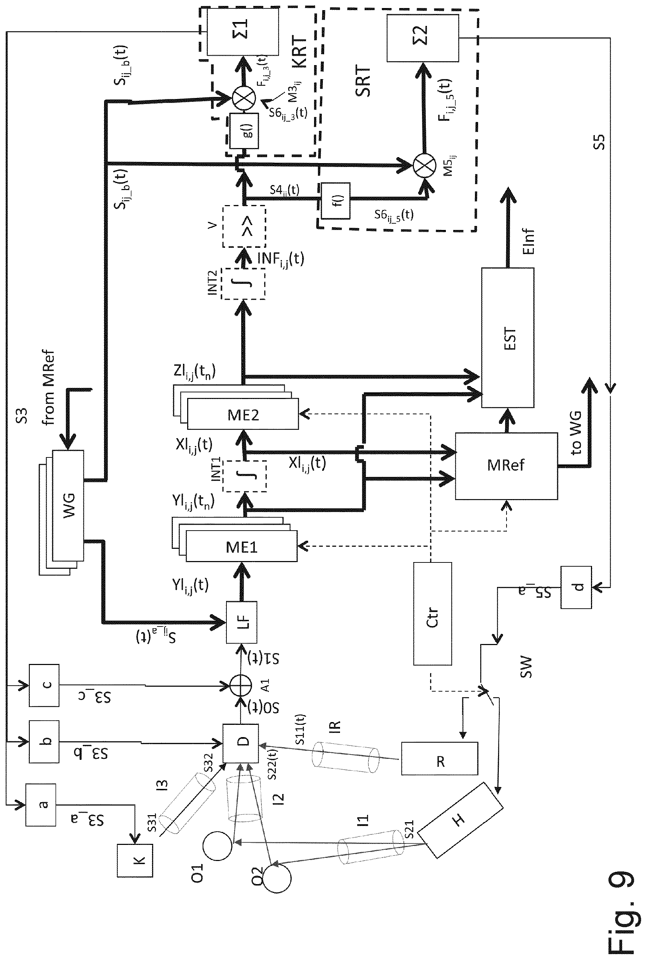

Figur 9 zeigt den beispielhaften Fall, dass das Sensorsystem über mehrere Wavelet-Generatoren WG, WG_II verfügt, die (teilweise oder alle) bevorzugt parametrisch durch den Schätzer und/oder die Referenzwerte, hier beispielsweise den Inhalt des Referenzspeichers MRef, gesteuert werden. So ist es beispielsweise denkbar, dass Wavelet-Signale erzeugt werden, die besonders wenig gestört werden oder zwei dicht beieinander liegende Objekte gut trennen. Wenn der Schätzer nämlich die Bewegung zweier Objekte überwacht, so kann er bevorzugt die Bahn der Objekte extrapolieren und die Auflösung, sprich das Frequenzspektrum, der Wavelets so anpassen, dass sich beispielsweise eine maximale Auflösung zu Ungunsten einer weiträumigen Überwachung ergibt. Das Verfahren lässt sich somit ideal an de gewünschten Anforderungen anpassen.

Figur 10 zeigt einige beispielhafte Wavelets $s_{i,j}(t)$. Die Wavelets $s_{i,j}(t)$ können bevorzugt aus einem Ur-Wavelet $s_{11}(t)$ durch zeitliche Verschiebung, zeitliche Streckung/Stauchung und Summierung/Subtraktion erzeugt werden. Für die Erfüllung der technischen Lehre ist es dabei unerheblich, ob eine solche zeitliche Verschiebung, zeitliche Streckung/Stauchung und Summierung/Subtraktion wirklich stattfindet oder ob die Signale direkt erzeugt werden. Wichtig ist in diesem Fall nur, dass zumindest ein Teil eines Signals als Ur-Wavelet $s_{11}(t)$ definiert werden kann und wesentliche Teile der anderen Signale $s_{i,j}(t)$ durch diese Operationen erzeugt werden können. Hinsichtlich der Theorie der Wavelets sei hier auf die einschlägige Literatur, beispielsweise Stephane Mallat, "A Wavelet Tour of Signal Processing" Academic Press London 1997 verwiesen.

Sinus- und Cosinus-Signale mit unterschiedlicher Phasenverschiebung und/oder unterschiedlicher Frequenz können dementsprechend aus einer einzigen Sinus-Welle oder -Halbwelle hergeleitet werden. Bevorzugt können einzelne Pulse daher für die Herleitung von Rechtecksignalen unterschiedlicher Frequenz verwendet werden. Die ist beispielhaft in Figur 11 gezeigt.

Es ist auch möglich, dass nicht vollständig korrelierende, ggf. auch bandbegrenzte Zufallssignale verwendet werden, die sich ausdrücklich nicht unbedingt aus Wavelets herleiten lassen. Es ist ja gerade ein Vorteil der erfindungsgemäßen Vorrichtung und/oder des erfindungsgemäßen Verfahrens, die Korrelationen gerade zulassen. Es ist besonders vorteilhaft, wenn diese Zufallssignale zusammen mit den besprochenen Verzögerungsgliedern Δt1 und Δt2 verwendet werden. Insofern werden dann bevorzugt alle oder ein Teil der Wavelet-Generatoren durch Zufallszahlengeneratoren ersetzt. Dies würde die Systemstruktur aber nicht grundsätzlich ändern.

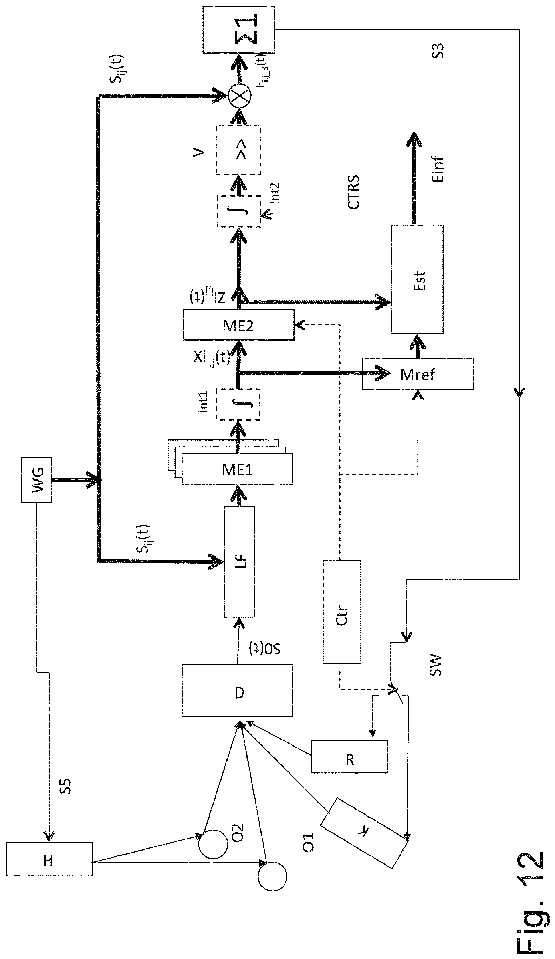

Figur 12 zeigt das Blockschaltbild eines bevorzugten Sensorsystem. Dabei wird der Sender H geregelt und es erfolgt eine kontinuierliche Phasen- bzw. Verzögerungsregelung. Das System weist in der Regel einen bevorzugten hochverstärkenden PI-Regler auf. Das besondere hier ist, dass der Wavelet-Generator WG direkt das Sendesignal S5 liefert.

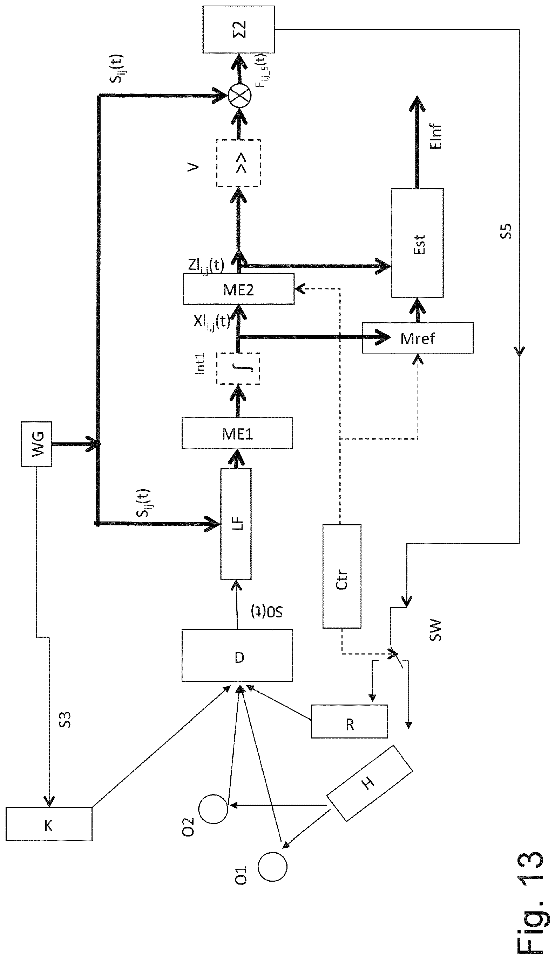

Figur 13 zeigt das Blockschaltbild einer bevorzugten Vorrichtung mit Senderregelung und mit Phasen- bzw. Verzögerungsanpassung durch Mischung orthogonaler Wavelets $s_{i,j}(t)$ und mit einem hochverstärkendem PI-Regler. Das besondere hier ist, dass der Wavelet-Generator WG direkt das Kompensatorspeisesignal S3 liefert.

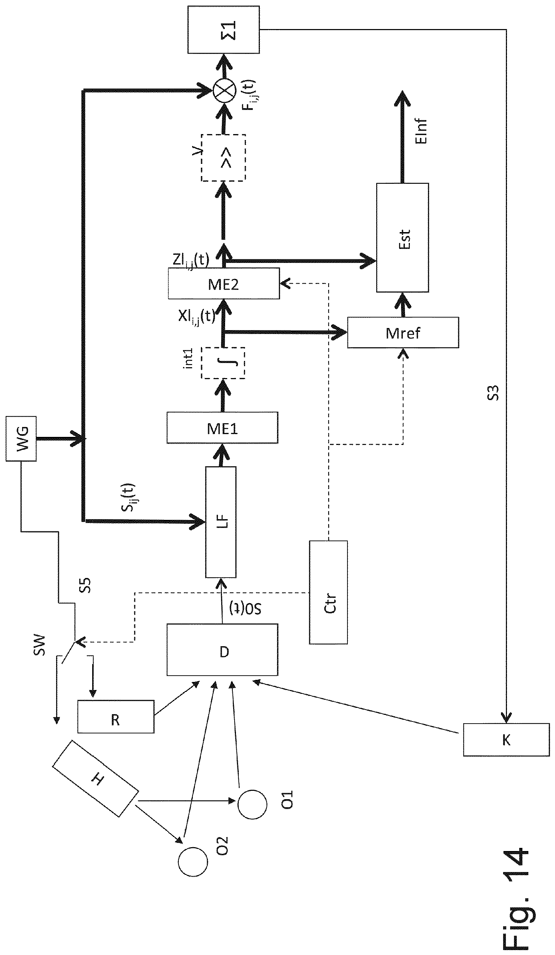

Figur 14 zeigt ein bevorzugtes System im Blockschaltbild mit Kompensationsregelung und hochverstärkendem PI-Regler. Das System kann mittels des Referenzsenders R, wie oben beschrieben, kalibriert werden. Die Kalibrierwerte werden bevorzugt im Speicher MRef abgelegt. Der Schätzer (EST) kann dann mit Hilfe dieser abgelegten Kalibrierwerte den Untergrund eliminieren.

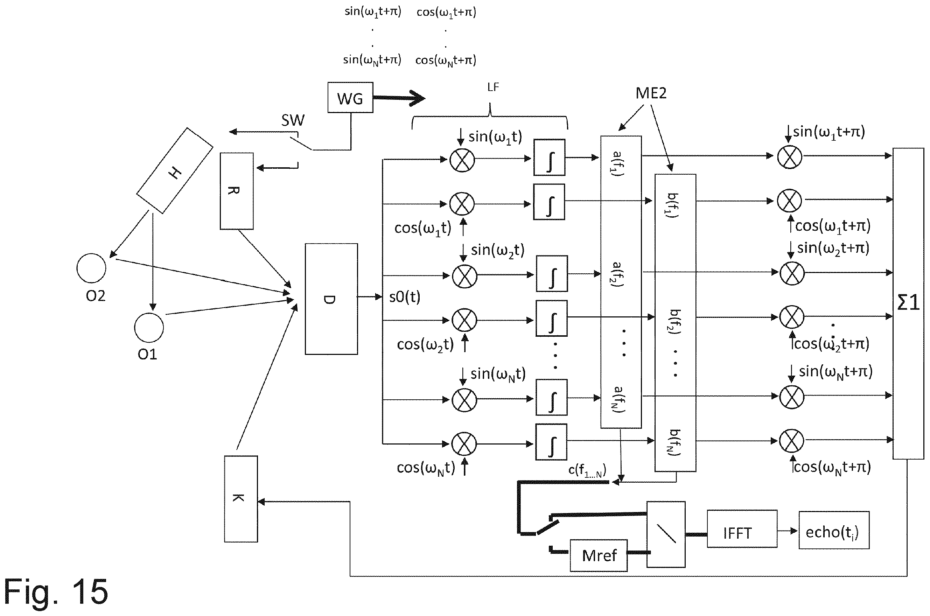

Figur 15 zeigt das Blockschaltbild der Vorrichtung unter Nutzung einer Ausgestaltung eines Frequenzbereichs-Verfahrens mit einem P-Regler ohne Verstärker. Die Wavelets $s_{i,j}(t)$ sind so gewählt, dass sich Paare aus jeweils einer Sinus- und einer dazu orthogonalen Cosinus-Funktion jeweils einer Frequenz ergeben. Die Frequenzen dieser Paare unterscheiden sich jeweils voneinander. Im Gegensatz zum Stand der Technik ist keine Orthogonalität unter den Paaren gefordert. Die Frequenzen der Sinus- und Cosinus-Signale müssen aber im Gegensatz zum Stand der Technik keine ganzzahligen Vielfachen einer Grundfrequenz sein, was einer Orthogonalitätsforderung gleichkäme. Zwischen den jeweils zwei Mitgliedern dieser Paare, also dem jeweiligen Cosinus- und Sinus-Signal, besteht aufgrund dieser Definition allerdings Orthogonalität innerhalb des Paares. Es ist also durchaus möglich, dass zumindest eine Teilmenge der Basissignale orthogonal zueinander ist.

Die Selektion der für die Weiterverarbeitung geeigneten Fourier-Koeffizienten aus der Menge der insgesamt so ermittelten Fourier-Koeffizienten $a(f_1)$ bis $a(f_N)$ und $b(f_1)$ bis $b(f_N)$ erfolgt bevorzugt später im Signalpfad. Dies kann in einer bevorzugten Ausführungsform auch durch den nicht-linearen Filter NLF erfolgen. Die Linearform LF ist bevorzugt eine Fourier-Koeffizienten-Bestimmung, die bevorzugt durch eine Multiplikation des Eingangssignals $S0(t)$ (das bevorzugt dem Verarbeitungszwischensignal oder dem Empfängerausgangssignal entspricht) mit dem jeweiligen Sinus- oder Cosinus-Signal und anschließender Integration in der Linearform LF erfolgt. Der zweite Speicher ME2 speichert zumindest einen Teil der Fourier-Koeffizienten $a(f_1)$ bis $a(f_N)$ und $b(f_1)$ bis $b(f_N)$ geeignet ab.

Zunächst wird auch hier der Referenzsender R mit den Wavelet-Signalen angesteuert. Die Fourier-Koeffizienten werden in dem zweiten Speicher ME2 gespeichert. Der Referenzspeicher MRef wird zum Abspeichern der so ermittelten Referenz-Fourier-Koeffizienten $a(f_1)$ bis $a(f_N)$ und $b(f_1)$ bis $b(f_N)$ an den zweiten Speicher ME2 angeschlossen. In einem nächsten Schritt wird der Schalter zur Auswahl der Sendequelle umgeschaltet, so dass der Sender H mit den Wavelet-Signalen aus dem Wavelet-Generator WG gespeist wird. Nun werden erneut die Fourier-Koeffizienten in dem zweiten Speicher ME2 gespeichert.

Nach der Abspeicherung der Referenz-Fourier-Koeffizienten im Referenzspeicher MRef kann bevorzugt durch Quotientenbildung im Schätzer zwischen den Werten in dem Referenzspeicher MRef und den neu gemessenen Fourier-Koeffizienten $a(f_1)$ bis $a(f_N)$ und $b(f_1)$ bis $b(f_N)$ ein neuer Satz Koeffizienten bestimmt werden. Diese Koeffizienten sind die Fourier-Koeffizienten einer Reflektion an einem Objekt O.

Der Schätzer (EST) dividiert also bevorzugt jeden so ermittelten Fourier-Koeffizient durch seinen korrespondierenden und zuvor im Referenzspeicher MRef abgelegten zugehörigen Koeffizienten, auch Kalibrationswert genannt. Durch eine anschließende inverse Fourier-Transformation (IFFT) in einer entsprechenden IFFT-Vorrichtung kann bevorzugt wieder ein zeitliches Echo-Signal $echo(t_i)$ als Ergebnis dieser inversen FFT-Rücktransformation ermittelt werden, das ein Echo-Informationssignal EInf ist. In diesem Echo-Signal $echo(t_i)$ wurde der Untergrund durch die beschriebene Division durch die Kalibrationswerte im Referenzspeicher (MRef) eliminiert. Hiernach kann die Echoentscheidung pegel- und/oder zeitabhängig erfolgen. Das bedeutet, dass beispielsweise ein Echo als vorliegend angenommen wird, wenn ein vorgegebener absoluter oder relativer Pegel beispielsweise zu einem vorbestimmten Zeitpunkt überschritten wird.

Ein solcher bevorzugter Echoentscheider mit Vorverarbeitung über das Spektrum arbeitet beispielsweise auf Basis des Wiener-Chintschin-Theorems. Das hier beschriebene System ist also in der Lage, Störer zuverlässig zu unterdrücken.

Die Rücktransformation erfolgt bevorzugt hinter dem nicht-linearen Filter NLF durch zumindest teilweise, vorzugsweise aber komplette Multiplikation der Fourier-Koeffizienten $a(f_1)$ bis $a(f_N)$ und $b(f_1)$ bis $b(f_N)$, sofern diese durch den Filter durchgelassen werden, mit dem jeweiligen mit -1 multiplizierten Sinus- oder Cosinus-Signal bzw. mit dem um $\pi$ (Pi) verschobenen Sinus- oder Cosinus-Signal. Durch Summation der einzelnen Signalanteile in dem ersten Summierer $\Sigma 1$ wird das Kompensatorspeisesignal S3 gebildet und dem Kompensator K zugeführt.

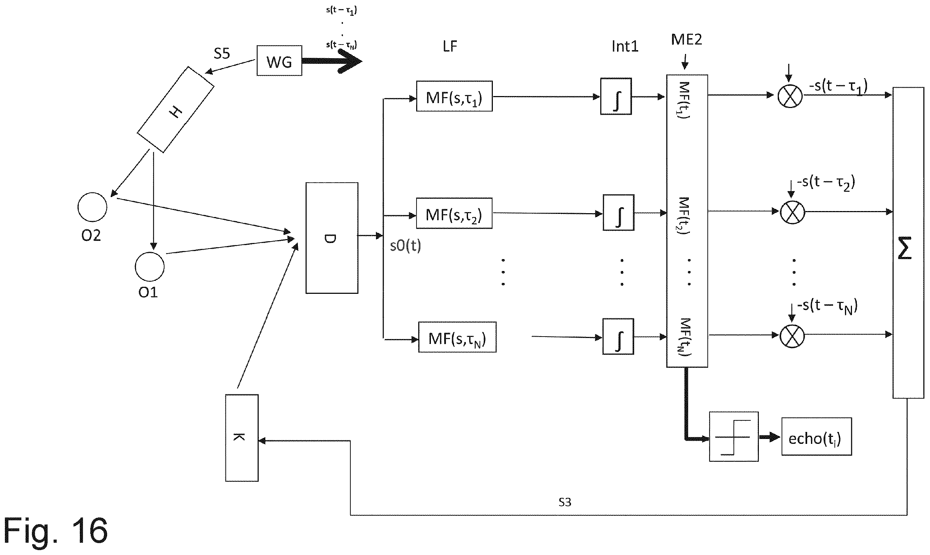

Figur 16 zeigt das schematische Blockschaltbild einer bevorzugten Gestaltung der erfindungsgemäßen Vorrichtung unter Verwendung des Zeitbereichsverfahrens. Der Wavelet-Generator WG erzeugt bevorzugt das Sendesignal S5 und eine Reihe von N Wavelets $s(t-\tau 1)$ bis $s(t-\tau N)$, die sich nur durch eine unterschiedliche Verzögerung unterscheiden. Vorzugsweise korrelieren die erzeugten N Wavelets $s(t-\tau 1)$ bis $s(t-\tau N)$ mit dem Sendesignal S5 in der Art, dass sie eine zeitlich verschobene Version desselben darstellen. Gegebenenfalls können sie in der Amplitude modifiziert sein.

Die Linearform wird nun durch jeweils einen bevorzugten Matched-Filter $MF(s,\tau_1)$ bis $MF(s,\tau_N)$ gebildet. Der jeweilige Matched-Filter lässt jeweils den Signalanteil ungefiltert durch, der dem jeweils zugehörigen Signal $s(t-\tau_1)$ bis $s(t-\tau_N)$ entspricht. Alle anderen Signalanteile, die dem zugehörigen Signal $s(t-\tau_1)$ bis $s(t-\tau_N)$ nicht entsprechen, werden bevorzugt nicht durchgelassen oder zumindest stark gedämpft, dass sie bevorzugt ignoriert werden können. Der Pegel wird bevorzugt durch die nachfolgende Integration ermittelt, die noch Teil der Linearform LF ist. Mit den im zweiten Speicher ME2 abgespeicherten Werten wird bevorzugt eine Einheitssprungfunktion multipliziert und durch eine zweite Bank aus Matched-Filtern gesendet. Die Summe der Ausgangssignale dieser zweiten Matched-Filter-Bank ergibt dann bevorzugt das gesuchte Echo-Signal $echo(t_i)$. In diesem Beispiel ist der Untergrund allerdings nicht abgezogen.

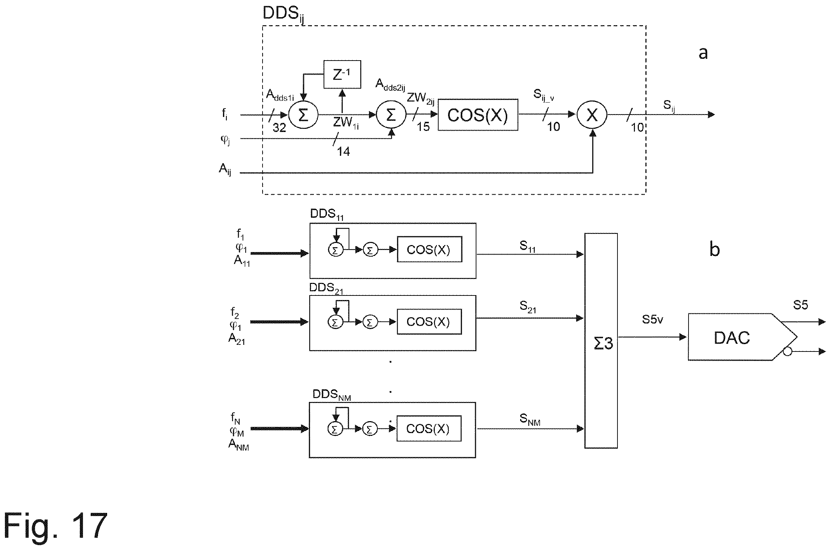

Die Figuren 17a und 17b zeigen ein bevorzugtes Beispiel eines Wavelet-Generators. In Figur 17a ist ein sogenannter Direct-Digital-Sequenzer DDS im Detail dargestellt. Der i-te DDS-Block erhält als Vorgabe eine 32-Bit-Zahl $f_i$, die die zu erzeugende Frequenz für den Kanal i,j vorgibt. Des Weiteren erhält er bevorzugt einen 14-Bit-Phasenoffset $\varphi_j$ und eine Amplitudenvorgabe $A_{i,j}$. Der vorgegebene Frequenzwert $f_i$ wird nun kontinuierlich durch den ersten DDS-Addierer $Adds_{1\_i}$ zu dem Zwischenwert $ZW_{1\_i}$ hinzuaddiert. Je höher $f_i$ ist, desto schneller kommt es zum Überlauf und damit zum Neustart. Zu den höchsten 14 Bit dieses Zwischenwertes $ZW_{1\_i}$ wird kontinuierlich durch den zweiten DDS-Addierer $Adds_{2\_i\_j}$ der 14-Bit-Phasenoffset $\varphi_j$ addiert. Es ergibt sich der zweite Zwischenwert $ZW_{2\_i,j}$. In diesem bevorzugten Beispiel ist dies ein 15-Bit-Wert. Dieser erzeugt mit Hilfe einer Look-Up-Table $\cos(x)$ das Ausgangssignal $s_{i,j\_v}(t)$, das mit der Amplitudenvorgabe $A_{i,j}$ zum eigentlichen Ausgangssignal $s_{i,j}(t)$ multipliziert wird.

Der Vorteil dieses Verfahrens ist, dass das Ur-Wavelet - hier eine einzelne $\cos(t)$-Schwingung - in dem Look-Up-Table abgelegt werden kann. Wird dieses als Speicher ausgelegt, so können beliebige Wavelet-Sätze beispielsweise während des Betriebs erzeugt und ggf. durch Umprogrammierung des Speichers ausgetauscht werden.

Es ist von Vorteil und bevorzugt, wenn aus dem Look-Up-Table auch das Signal zum Zurücksetzen des Addierers $Adds_{1\_i}$ gegeben wird. Erst durch dieses Zurücksetzen am Ende einer Periode kommt es zu einer echten Schwingung und periodischen Signalisierung.

Mehrere solche DDS-Blöcke werden bevorzugt durch einen Summierer $\Sigma 3$ zu einem Signal S5_v zusammengefasst, aus dem durch Digital-zu-Analogwandlung DAC das Sendesignal S5 erzeugt werden kann. Neben dieser beispielhaften Realisierung des Wavelet-Generators sind sehr viele andere Realisierungsmöglichkeiten gegeben, die weit über den Inhalt dieser Offenbarung hinausgehen würden.

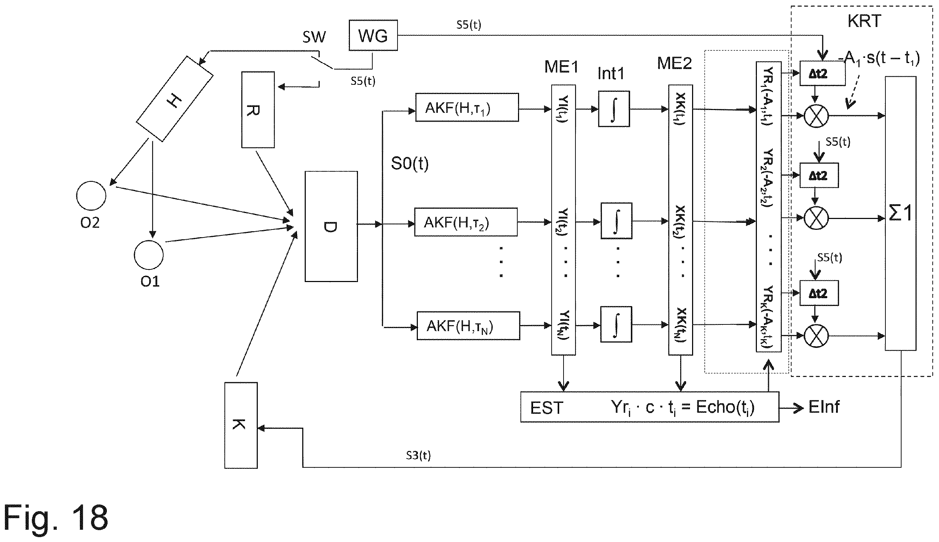

Figur 18 zeigt ein beispielhaftes bevorzugtes System mit Autokorrelationsfiltern $AKF(H, \tau_1)$ bis $AKF(H, \tau_N)$ als Linearform LF. Der Schätzer EST berechnet bevorzugt aus den Regelwert-Signalen $y_i(t_1)$ bis $y_i(t_N)$ und dessen zwischengespeicherten integrierten Signalen $xk(t_1)$ bis $xk(t_N)$ das Echosignal $Echo(t_i)$. Dieses Signal wird in diesem Beispiel als Echo-Information EInf ausgegeben. Der Schätzer kann dabei beispielsweise einen Viterbi-Algorithmus mit einer angepassten Markov-Kette einsetzen, um die Bewegung von zuvor bereits erkannten Objekten zu berücksichtigen. Das gezeigte beispielhafte System gemäß Figur 18 verwendet das erfindungsgemäße Verfahren im Zeitbereich, wobei der Entscheider (Schätzer) die Echos auswertet. Bei diesem Verfahren wird die Laufzeit des Lichts für die Bestimmung des Abstands verwendet.

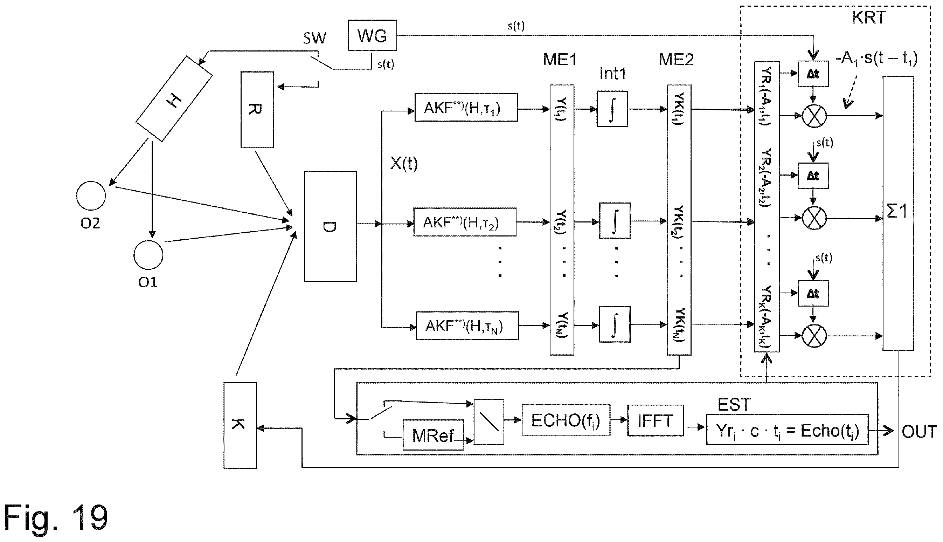

Figur 19 zeigt das System gemäß Figur 18, wobei bevorzugt unter Nutzung des Wiener-Chintschin-Theorems ein im Referenzspeicher MRef zwischengespeichertes Referenzspektrum aus dem Messspektrum eliminiert wird. Hierzu wird, wie oben bereits beschrieben, mittels des Referenzsenders R zunächst das Referenzspektrum $YK(t_1)$ bis $YK(t_n)$ erzeugt und dann gemessen. Das gemessene Spektrum wird im Speicher MRef abgelegt. Danach wird der Referenzsender R abgeschaltet und mit dem Sender H ein Objekt O oder mehreren Messobjekte O1, O2 vermessen. Das neue Spektrum $YK(t_1)$ bis $YK(t_n)$ wird bevorzugt durch die korrespondierenden Werte, die in dem Referenzspeicher MRef gespeichert sind, geteilt. Das sich ergebende Echo-Spektrum $ECHO(f_i)$ wird bevorzugt durch eine inverse Fourier-Transformation (IFFT) in das Echosignal zurückgewandet. Hier können wieder nicht-lineare Schätzalgorithmen zur Bestimmung der Reflexions-Peaks eingesetzt werden. Diese können in einer besonderen Ausführungsform auch die Kompensationssignalerzeugung beispielsweise unter Zuhilfenahme des optionalen nicht-linearen Filters NLF steuern. In dem hier gezeigten Beispiel umfasst der Schätzer (EST) auch den Referenzspeicher (MRef). Er kann auch separat ausgeführt sein.

Die ermittelten Reflexionen, die den Entfernungen zum jeweiligen Objekt entsprechen, werden von dem Entscheider (Schätzer EST) als Signal OUT ausgegeben. Dieses ist das Echo-Informationssignal EInf.

Bezugszeichenliste

| | |
|---|---|
| a | Erster Verstärker für das Kompensatorspeisesignal |
| A | Beliebiges Signal für die Erläuterung der Linearform |
| b | Zweiter Verstärker für das Kompensatorspeisesignal |
| B | Beliebiges Signal für die Erläuterung der Linearform |
| c | Dritter Verstärker für das Kompensatorspeisesignal |
| CT | Halios Regler |
| CTRS | Steuersignal-Bus für den nicht-linearen Filter NLF |
| Ctr | Ablaufsteuerung |
| d | Speisesignalverstärker |
| D | Empfänger (Detektor) |
| D1 | Empfänger (Detektor) |
| $Dt_{i,j\_3}$ | erster Verzögerungssteuerbus |
| $Dt_{i,j\_5}$ | zweiter Verzögerungssteuerbus |
| $\Delta t1$ | Erste Verzögerungseinheit $\Delta t1$ für die Phasen- bzw. Verzögerungsregelung der Signalkomponenten des Sendesignals S5 |
| $\Delta t2$ | Zweite Verzögerungseinheit $\Delta t2$ für die Phasen- bzw. Verzögerungsregelung der Signalkomponenten des Kompensatorspeisesignals S3 |
| echo(t) | Echosignal (Zeitbereich) |
| EInf | Echo-Informationssignal |
| EST | Schätzer |
| $f_o$ | Grundfrequenz |
| f() | zweite Gewichtungsmatrix; Filterfunktion |
| $F_{i,j\_3}(t)$ | Rohkompensationssignal (in der Regel eine Signalmatrix.) |
| $F_{i,j\_5}(t)$ | Rohsendesignal (in der Regel eine Signalmatrix.) |
| g() | erste Gewichtungsmatrix; Filterfunktion |
| G1 | Signalgenerator wie im Stand der Technik beschrieben |
| H | Sender |
| H1 | Sender |
| I1 | Erste Übertragungsstrecke |
| I2 | Zweite Übertragungsstrecke |
| I3 | Dritte Übertragungsstrecke (Diese ist typischerweise in ihren Eigenschaften näherungsweise bekannt.) |
| INT1 | Erste Integratoreinheit aus einem oder mehreren Integratoren |
| INT2 | Zweite Integratoreinheit aus einem oder mehreren Integratoren |
| $inf_{i,j}(t)$ | Integriertes Ausgangssignal der zweiten Integratoreinheit INT2, Wert der Ausgangssignalmatrix $INF_{i,j}$ |
| $INF_{i,j}$ | integrierte Ausgangssignalmatrix $INF_{i,j}$ der zweiten Integratoreinheit INT2 |

(fortgesetzt)

| | |
|---|---|
| IR | Referenzübertragungsstrecke |
| K | Kompensationssender |
| LF | Linearform. Die Linearform verknüpft mindestens zwei Signale miteinander und ergibt mindestens ein Ausgangssignal. Bei den Signalen kann es sich auch um je eine Signal-Matrix handeln. Eine Linearform hat die Eigenschaft, dass die Multiplikation eines Eingangssignals mit einem Faktor a zu einer Multiplikation des oder der zugehörigen Ausgangssignale um den Faktor a führt. Die Verknüpfung der Summe zweier Signale mit einem dritten Signal mittels einer Linearform ist äquivalent zu der Summierung der Verknüpfungen jedes der beiden Signale vor der Addition mit dem dritten Signal mittels je einer gleichen Linearform und anschließender Addition. Typische Linearformen sind beispielsweise Skalar-Produkte, $L^2$-Normen, Faltungen, Autokorrelationsfilter, Matched-Filter etc. |
| LF(A,B) | Bezeichnet im Text die Verknüpfung zweier Signale A und B mittels einer Linearform. (siehe auch LF) |
| M3ij | Dritte Multipliziereinheit bestehend aus verschiedenen Multiplizierern |
| $M5_{ij}$ | Fünfte Multipliziereinheit bestehend aus verschiedenen Multiplizierern |
| ME1 | Erster Speicher zur Speicherung der Werte der Signale $yi_{i,j}(t)$ der Ausgangssignalmatrix $YI_{i,j}(t)$ der Linearform LF |
| ME2 | Zweiter Speicher zur Speicherung der Werte der Signale $xi_{i,j}(t)$ der Ausgangssignalmatrix $XI_{i,j}(t)$ der ersten Integrationseinheit Int1 |
| MRef | Referenzspeicher. |
| $M_{ref\_i,j}(t)$ | Ausgangssignalmatrix des Referenzspeichers MRef. |
| $NF_{i,j}$ | Ausgangssignalmatrix $NF_{i,j}$ des nicht-linearen Filters NLF. Dabei müssen nicht alle Signale $nf_{i,j}(t)$ der Ausgangssignalmatrix $NF_{i,j}$ tatsächlich vorhanden oder von Null verschieden sein. |
| $nf_{i,j}(t)$ | Signal $nf_{i,j}(t)$ der Ausgangssignalmatrix $NF_{i,j}$ des nicht-linearen Filters NLF. Nicht alle Signale $nf_{i,j}(t)$ müssen in der Ausgangssignalmatrix $NF_{i,j}$ tatsächlich vorhanden oder von Null verschieden sein. |
| O | Objekt in der Übertragungsstrecke, bevorzugt zwischen der Übertragungsstrecke I1 und der Übertragungsstrecke I2. Das Objekt O kann auch selbst eine Übertragungsstrecke sein. |
| O1 | Erstes Objekt in der Übertragungsstrecke. Das Objekt O1 kann auch selbst eine Übertragungsstrecke sein. |
| O2 | Zweites Objekt in der Übertragungsstrecke. Das Objekt O2 kann auch selbst eine Übertragungsstrecke sein. |
| P | Ur-Wavelet-Periode |
| Pa | Ur-Wavelet-Periode |
| PB | Ur-Wavelet-Periode |
| R | Referenzsender |
| $S_{-1}$ bis $S_3$ | Signalanteile des Signals s(t), wobei s(t) im Frequenzbereich als S(f) dargestellt ist. |
| S0(t) | Empfängerausgangssignal |
| S0e(t) | Der Signalanteil im Empfängerausgangssignal S0(t), der auf die Modifikation des Übertragungsstreckenausgangssignals S22(t) durch das Objekt oder die Objekte (O1, 02...) zurückzuführen ist. Er korreliert daher mit dem entsprechenden Anteil (S22e(t)) im ersten Übertragungsstreckenausgangssignal S22(t). |
| S0r(t) | Referenzempfangssignal |
| S1(t) | Modifiziertes Empfängerausgangssignal |

| | | |
|---|---|---|
| | S1e(t) | Der Signalanteil im modifizierten Empfängerausgangssignal S1(t), der auf die Modifikation des Übertragungsstreckenausgangssignals S22(t) durch das Objekt oder die Objekte (O1, 02...) zurückzuführen ist. Er korreliert daher mit dem entsprechenden Anteil (S22e(t)) im ersten Übertragungsstreckenausgangssignal S22(t) und dem Anteil S0e(t) im Empfängerausgangssignal S0(t). |
| | S3 | Kompensatorspeisesignal |
| | S4 | Regelsignal (im Stand-der-Technik-Halios), dass als Ausgangssignal verwendet wird. Das Signal S4 stellt den Messwert des HALIOS Systems dar. |
| | $S4_{i,j}$ | Ausgangssignalmatrix $S4_{i,j}$ der Verstärkereinheit V |
| | $S4_{i,j}(t)$ | Ausgangssignal $S4_{i,j}(t)$ der Ausgangssignalmatrix $S4_{i,j}(t)$ der Verstärkereinheit V |
| | S5 | Sendesignal |
| | S5_a | Unmittelbares Sendesignal |
| | $S6_{i,j\_3}(t)$ | Kompensationspegelmatrix |
| | $S6_{i,j\_5}(t)$ | Sendepegelmatrix |
| | S11 | Referenzsignal |
| | S21 | Gesendetes Sendersignal |
| | S22(t) | Erstes Übertragungsstreckenausgangssignal |
| | S22e(t) | Der Signalanteil im ersten Übertragungsstreckenausgangssignal S22, der auf die Modifikation dieses Signals durch das Objekt oder die Objekte (O1, 02...) zurückzuführen ist. |
| | S31 | Gesendetes Kompensationssendersignal |
| | S32 | Zweites Übertragungsstreckenausgangssignal |
| | $S_{i,j}$ | Ausgangssignal-Matrix $S_{i,j}$ des Wavelet-Generators (WG) mit den Ausgangssignalen $s_{i,j}(t)$ |
| | $s_{i,j}(t)$ | Ausgangssignal $s_{i,j}(t)$ der Ausgangssignal-Matrix $S_{i,j}$ des Wavelet-Generators (WG) |
| | $s_{i,j\_a}(t)$ | Ausgangssignal $s_{i,j\_a}(t)$ des ersten Wavelet-Generators (WG_I) |
| | $s_{i,j\_b}(t)$ | Ausgangssignal $s_{i,j\_a}(t)$ des zweiten Wavelet-Generators (WG_II) |
| | $s_{i,j\_c}(t)$ | Ausgangssignal $s_{i,j\_a}(t)$ des dritten Wavelet-Generators (WG_III) |
| | $s_{i,j\_5}$ | verzögerten Basissignale $s_{i,j\_5}$ der Senderseite |
| | $s_{i,j\_3}$ | verzögerten Basissignale $s_{i,j\_3}$ der Kompensationssenderseite |
| | S(f) | Signalbetragsspektrum. Das Signalbetragsspektrum ist der Betrag der Fouriertransformierten des Signals S(t) |
| | S(t) | Allgemeines Signal, dass sich aus mehreren Harmonischen $S_{-1}$ bis $S_3$ zusammensetzt. Es handelt sich um ein Signal, das als beispielhaftes Empfängerausgangssignal S0(t) zu Anfang dieser Offenbarung diskutiert wird. |
| | SW | Schalter zum Umschalten des unmittelbaren Sendesignals S5_a. |
| | T | Periodenlänge / Zeitdauer |
| | Ta | Periodenlänge / Zeitdauer |
| | Tb | Periodenlänge / Zeitdauer |
| | Σ1 | Erster Summierer. Dieser berechnet das Kompensatorspeisesignal S3. |
| | Σ2 | Zweiter Summierer. Dieser berechnet das Sendesignal S5. |
| | WG | Wavelet-Generator |
| | WG_II, WG_III | Zweite bzw. dritter Wavelet-Generator |

(fortgesetzt)

| | |
|---|---|
| $XI_{i,j}$ | Ausgangssignalmatrix $XI_{i,j}$ der ersten Integrationseinheit INT1 |
| $xi_{i,j}(t)$ | integrierte Regelwert-Signale $xi_{i,j}(t)$ der Ausgangssignalmatrix $XI_{i,j}$ der ersten Integrationseinheit INT1 |
| $YI_{i,j}$ | Ausgangssignalmatrix $YI_{i,j}$ der Linearform LF |
| $YI_1$, $YI_{1\_i,j}$ | Erste Ausgangssignalmatrix $YI_{1\_i,j}$ der Linearform LF |
| $YI_2$, $YI_{2\_i,j}$ | Zweite Ausgangssignalmatrix $YI_{2\_i,j}$ der Linearform LF |
| $YI_3$, $YI_{3\_i,j}$ | Dritte Ausgangssignalmatrix $YI_{3\_i,j}$ der Linearform LF |
| $YI_4$, $YI_{4\_i,j}$ | Vierte Ausgangssignalmatrix $YI_{4\_i,j}$ der Linearform LF |
| $YI_5$, $YI_{5\_i,j}$ | Fünfte Ausgangssignalmatrix $YI_{5\_i,j}$ der Linearform LF |
| $YI_6$, $YI_{6\_i,j}$ | Sechste Ausgangssignalmatrix $YI_{6\_i,j}$ der Linearform LF |
| $yi_{ij}(t)$ | Regelwert-Signale $yi_{ij}(t)$ der Ausgangssignalmatrix $YI_{i,j}$ der Linearform LF |
| $yi_{1\_i,j}(t)$ | Erste Regelwert-Signale $yi_{1\_i,j}(t)$ der ersten Ausgangssignalmatrix $YI_{1\_i,j}$ der Linearform LF, wobei diese durch Verknüpfung mittels der Linearform LF gebildet werden. |
| $yi_{2\_i,j}(t)$ | Zweite Regelwert-Signale $yi_{2\_i,j}(t)$ der ersten Ausgangssignal-matrix $YI_{2\_i,j}$ der Linearform LF, wobei diese in der Linearform LF durch Multiplikation gebildet werden. |
| $yi_{3\_i,j}(t)$ | Dritte Regelwert-Signale $yi_{3\_i,j}(t)$ der ersten Ausgangssignalmatrix $YI_{3\_i,j}$ der Linearform LF, wobei diese in der Linearform LF durch Multiplikation und anschließende Filterung und/oder Integration gebildet werden. |
| $yi_{4\_i,j}(t)$ | Vierte Regelwert-Signale $yi_{4\_i,j}(t)$ der ersten Ausgangssignal-matrix $YI_{4\_i,j}$ der Linearform LF, wobei diese in der Linearform LF durch Bildung eines Skalar-Produkts gebildet werden. |
| $yi_{5\_i,j}(t)$ | Fünfte Regelwert-Signale $yi_{5\_i,j}(t)$ der ersten Ausgangssignal-matrix $YI_{5\_i,j}$ der Linearform LF, wobei diese in der Linearform LF durch eine Korrelationsfilter gebildet werden. |
| $yi_{6\_i,j}(t)$ | Sechste Regelwert-Signale $yi_{6\_i,j}(t)$ der ersten Ausgangssignal-matrix $YI_{6\_i,j}$ der Linearform LF, wobei diese in der Linearform LF durch ein Matched-Filter gebildet werden. |
| $YIn_{i,j}$ | Ausgangssignalmatrix $YIn_{i,j}$ mit den Regelwert-Signalen $yi_{i,j}(t,)$ zum Zeitpunkt $t_n$ |
| $yi_{i,j}(t_n)$ | Regelwert-Signale $yi_{i,j}(t,)$ der Ausgangssignalmatrix $YIn_{i,j}$ zum Zeitpunkt $t_n$ |
| $ZI_{i,j}$ | Ausgangssignalmatrix $ZI_{i,j}$ der zweiten Speichereinheit ME2 |
| $zi_{i,j}(t)$ | Regelwert-Signale $zi_{i,j}(t)$ der Ausgangssignalmatrix $ZI_{i,j}$ der zweiten Speichereinheit ME2 |

**Patentansprüche**

1. Optisches Sensorsystem zum Erkennen eines Abstands oder einer Eigenschaft eines Objekts (O1, O2) in einer Übertragungsstrecke (I) zwischen einem Sender (H) und einem Empfänger (D), umfassend

    - einen Wavelet-Generator (WG) zum Erzeugen mindestens eines Paars von Wavelets als Speisesignal (S5) zum Ansteuern des Senders (H), wobei die Wavelets derart gewählt sind, dass sich Paare aus jeweils einer Sinusfunktion und einer dazu orthogonalen Cosinusfunktion ergeben;
    - einen Sender (H) zum Erzeugen eines Sendesignals (S21) aus dem Speisesignal (S5), um das Sendesignal (S21) in die Übertragungsstrecke (I) hinein zu senden, sodass es durch das Objekt (O1, O2) beeinflusst wird;
    - einen Kompensationssender (K) zum Aussenden eines Kompensationssendersignals (S31) an einen Empfänger (D), wobei der Kompensationssender dazu ausgebildet ist, mit einem Kompensationsspeisesignal (S3) gespeist zu werden;
    - einen Empfänger (D) zum Empfangen des durch das Objekt beeinflussten Sendesignals (S21) als Empfangssignal (S22), zum Empfangen des mit dem Empfangssignal (S22) überlagerten Kompensationssendersignals (S31), wobei der Empfänger (D) zum Ausgeben eines Empfängerausgangssignals (S0) und zum Zuführen des Empfängerausgangssignals (S0) zu einer Verarbeitungseinheit (LF) ausgebildet ist;
    - eine Verarbeitungseinheit (LF) zum Weiterverarbeiten des Empfängerausgangssignals zu einem weiterverarbeiteten Empfängerausgangssignal, indem das Empfängerausgangssignal (S0) mit jeweils einem Paar der Wavelets multipliziert und anschließend integriert wird, wodurch Fourier-Koeffizienten gebildet werden;

- einen Speicher zum Abspeichern des weiterverarbeiteten Empfängerausgangssignals;

- einen zweiten Speicher (ME2) zum Speichern der Fourier-Koeffizienten;

- einen Referenzspeicher (MRef) zum Abspeichern während einer Kalibration erzeugter Referenz-Fourier-Koeffizienten;

- einen Schätzer zum Durchführen einer Quotientenbildung, indem die Fourier-Koeffizienten durch die zugehörigen Referenz-Fourier-Koeffizienten dividiert und Objektreflexions-Fourier-Koeffizienten gebildet werden, die eine Aussage über die Eigenschaft des Objekts oder den Abstand zu dem Objekt erlauben;

- eine Rücktransformations-Einheit zum Multiplizieren der Fourier-Koeffizienten mit dem Faktor -1 und mit jeweiligen Wavelets,

- wobei die Rücktransformations-Einheit einen Summierer zum Erzeugen des Kompensationsspeisesignal (S3) durch Summieren der multiplizierten Signale zu dem Kompensationsspeisesignal (S3) umfasst,

- wobei die Rücktransformations-Einheit zum Zuführen des Kompensationsspeisesignals (S3) zu dem Kompensationssender (K) ausgebildet ist.

2. Optisches Sensorsystem nach Anspruch 1, **dadurch gekennzeichnet, dass** der Schätzer dazu ausgebildet ist, die gebildeten Objektreflexions-Fourier-Koeffizienten anschließend durch eine inverse Fouriertransformation in einer IFFT-Vorrichtung in ein zeitliches Echo-Informationssignal (EInf) umzuwandeln.

3. Optisches Sensorsystem nach Anspruch 2, **dadurch gekennzeichnet, dass** der Schätzer dazu ausgebildet ist, aus dem Echo-Informationssignal (EInf) ein Echo einer Reflexion an dem Objekt zu erkennen, wenn ein vorgegebener absoluter oder relativer Pegel überschritten wird, bevorzugt zu einem vorbestimmten Zeitpunkt.

4. Optisches Sensorsystem nach einem der vorhergehenden Ansprüche, **dadurch gekennzeichnet, dass** die Wavelets eines Paares dieselbe Frequenz haben.

5. Optisches Sensorsystem nach einem der vorhergehenden Ansprüche, **dadurch gekennzeichnet, dass** die Objektreflexions-Fourier-Koeffizienten die Fourier-Koeffizienten einer Reflexion an dem Objekt bilden.

6. Optisches Sensorsystem nach einem der vorhergehenden Ansprüche, **dadurch gekennzeichnet, dass** der Schätzer dazu ausgebildet ist, aus dem Objektreflexions-Fourier-Koeffizienten eine Reflexion an dem Objekt zu erkennen durch Einsatz eines neuronalen Netzes, eines HMM-Erkenners (Hidden Markov Model), DTW-Erkenners (Dynamic-time-warping), eines Viterbi-Dekoders oder von Petri-Netzen.

7. Optisches Sensorsystem nach einem der vorhergehenden Ansprüche, **dadurch gekennzeichnet, dass** der Schätzer dazu ausgebildet ist, aus den Objektreflexions-Fourier-Koeffizienten eine Reflexion an dem Objekt zu erkennen durch Suchen des Maximums.

8. Optisches Sensorsystem nach einem der vorhergehenden Ansprüche, **dadurch gekennzeichnet, dass** der Wavelet-Generator zum Erzeugen mehrerer Paare von Wavelets ausgebildet ist, wobei die Paare von Wavelets unterschiedliche Frequenzen haben und bevorzugt die Frequenzen keine ganzzahligen Vielfachen einer Grundfrequenz sind.

9. Optisches Sensorsystem nach einem der vorhergehenden Ansprüche, **dadurch gekennzeichnet, dass** die Verarbeitungseinheit dazu ausgebildet ist, die einzelnen Fourier-Koeffizienten mittels je eines Wavelets eines Paares der Wavelets zu bilden.

10. Optisches Sensorsystem nach einem der vorhergehenden Ansprüche, **dadurch gekennzeichnet, dass** der Wavelet-Generator zum Erzeugen mehrerer Paare von Wavelets ausgebildet ist, wobei die einzelnen Paare der Wavelets nicht orthogonal zu anderen Paaren von Wavelets sind.

11. Optisches Sensorsystem nach einem der vorhergehenden Ansprüche, **dadurch gekennzeichnet, dass** der Sender mit einem Sendesignal gespeist wird, das aus der Summe der im Wavelet-Generator (WG) erzeugten Paare von Wavelets gebildet wird.

12. Optisches Sensorsystem nach einem der vorhergehenden Ansprüche, **gekennzeichnet durch** einen Auswahlschalter (SW), um mit dem Speisesignal wahlweise den Sender oder während einer Kalibration einen Referenzsender (R) zu speisen;
und **dadurch gekennzeichnet, dass**

- der Referenzsender (R) während der Kalibration mit dem Speisesignal (S5) gespeist wird; und
- die Referenz-Fourier-Koeffizienten in der Verarbeitungseinheit (LF) erzeugt werden, wenn der Auswahlschalter (SW) derart geschaltet ist, dass die Wavelets der Signalerzeugungseinheit dem Referenzsender (R) zugeführt werden und dieser ein Sendesignal direkt zu dem Empfänger (D) sendet.

13. Optisches Sensorsystem nach einem der Ansprüche 2 bis 12, **dadurch gekennzeichnet, dass** der Schätzer dazu ausgebildet ist, ein Echo-Zeitsignal (echo(t)) als Echo-Informationssignal (EInf) auszugeben oder weiterzuverarbeiten, um daraus die Entfernung zu einem Objekt (O) zu bestimmen oder um auf das Vorhandensein weiterer Objekte (O) zu schließen, deren Entfernung nicht bestimmt wird.

**Claims**

1. An optical sensor system for identifying a distance or a property of an object (O1, O2) in a transmission line (I) between a transmitter (H) and a receiver (D) including

- a wavelet generator (WG) for generating at least one pair of wavelets as a feed signal (S5) for controlling the transmitter (H), wherein the wavelets are chosen such that pairs result from respectively a sine function and a cosine function orthogonal thereto;
- a transmitter (H) for generating a transmission signal (S21) from the feed signal (S5) in order to send the transmission signal (S21) into the transmission line (I), so that it is influenced by the object (O1, O2);
- a compensation transmitter (K) for emitting a compensation transmitter signal (S31) to a receiver (D), wherein the compensation transmitter is arranged to be fed with a compensation feed signal (S3);
- a receiver (D) for receiving the transmission signal (S21) influenced by the object as a receive signal (S22), for receiving the compensation transmitter signal (S31) overlaid with the receive signal (S22), wherein the receiver (D) is arranged for outputting a receiver output signal (S0) and for feeding the receiver output signal (S0) to a processing unit (LF);
- a processing unit (LF) for further processing the receiver output signal to form a further-processed receiver output signal in that the receiver output signal (S0) is multiplied with respectively one pair of wavelets and subsequently integrated, whereby Fourier coefficients are formed;
- a memory for storing the further-processed receiver output signal;
- a second memory (ME2) for storing the Fourier coefficients
- a reference memory (MRef) for storing reference Fourier coefficients generated during a calibration;
- an estimator for performing a quotient formation in that the Fourier coefficients are divided by the associated reference Fourier coefficients and object reflection Fourier coefficients are formed which permit an indication about the property of the object or the distance to the object;
- a retransformation unit for multiplying the Fourier coefficients with the factor -1 and with respective wavelets,
- wherein the retransformation unit includes a summing unit for generating the compensation feed signal (S3) by summing the multiplied signals to form the compensation feed signal (S3),
- wherein the retransformation unit is arranged for feeding the compensation feed signal (S3) to the compensation transmitter (K).

2. The optical sensor system according to claim 1, **characterised in that** the estimator is arranged to subsequently convert the formed object reflection Fourier coefficients in an IFFT device into a time domain echo information signal (Einf) by means of an inverse Fourier transformation.

3. The optical sensor system according to claim 2, **characterised in that** the estimator is arranged to identify, from the echo information signal (Einf), an echo of a reflection at the object, when a predefined absolute or relative level is exceeded, preferably at a predetermined point in time.

4. The optical sensor system according to one of the preceding claims, **characterised in that** the wavelets of a pair have the same frequency.

5. The optical sensor system according to one of the preceding claims, **characterised in that** object reflection Fourier coefficients form the Fourier coefficients of a reflection at the object.

**6.** The optical sensor system according to one of the preceding claims, **characterised in that** the estimator is arranged to identify, from the object reflection Fourier coefficient, a reflection at the object by using a neuronal network, an HMM detector (Hidden Markov Model), a DTW detector (Dynamic Time Warping), a Viterbi decoder or by using Petri networks.

**7.** The optical sensor system according to one of the preceding claims, **characterised in that** the estimator is arranged to identify a reflection at the object from the object reflection Fourier coefficients by searching for the maximum.

**8.** The optical sensor system according to one of the preceding claims, **characterised in that** the wavelet generator is arranged for generating several pairs of wavelets, wherein the pairs of wavelets have different frequencies and the frequencies are preferably not integer multiples of a base frequency.

**9.** The optical sensor system according to one of the preceding claims, **characterised in that** the processing unit is arranged to form the individual Fourier coefficients by means of respectively one wavelet of a pair of wavelets.

**10.** The optical sensor system according to one of the preceding claims, **characterised in that** the wavelet generator is arranged for generating several pairs of wavelets, wherein the individual pairs of wavelets are not orthogonal to other pairs of wavelets.

**11.** The optical sensor system according to one of the preceding claims, **characterised in that** the transmitter is fed with a transmission signal, which is formed from the sum of the pairs of wavelets generated in the wavelet generator (WG).

**12.** The optical sensor system according to one of the preceding claims, **characterised by** a selector switch (SW) in order to either feed the feed signal to the transmitter or, during a calibration, to a reference transmitter (R); and **characterised in that**

- the reference transmitter (R) is fed with the feed signal (S5) during a calibration: and
- the reference Fourier coefficients are generated in the processing unit (LF), when the selector switch (SW) is switched such that the wavelets of the signal generating unit are fed to the reference transmitter (R) and the latter sends a transmission signal directly to the receiver (D).

**13.** The optical sensor system according to one of claims 2 to 12, **characterised in that** the estimator is arranged to emit an echo time signal (echo(t)) as an echo information signal (Einf) or to process it further in order to determine therefrom the distance to an object (O) or in order to conclude therefrom that further objects (O) are present, the distance of which is not determined.

## Revendications

**1.** Système de capteur optique pour détecter une distance ou une propriété d'un objet (O1, O2) dans un trajet de transmission (1) entre un émetteur (H) et un récepteur (D), comprenant

- un générateur d'ondelettes (WG) pour générer au moins une paire d'ondelettes en tant que signal d'alimentation (S5) pour piloter l'émetteur (H), dans lequel les ondelettes sont sélectionnées de telle sorte qu'il en résulte des paires d'une fonction sinus et d'une fonction cosinus orthogonales ;
- un émetteur (H) pour générer un signal de transmission (S21) à partir du signal d'alimentation (S5) afin de transmettre le signal de transmission (S21) dans le chemin de transmission (I) de sorte qu'il soit influencé par l'objet (O1, O2) ;
- un émetteur de compensation (K) pour envoyer un signal d'émetteur de compensation (S31) à un récepteur (D), dans lequel l'émetteur de compensation est conçu pour être alimenté avec un signal d'alimentation de compensation (S3) ;
- un récepteur (D) pour recevoir le signal transmis (S21) influencé par l'objet en tant que signal reçu (S22), pour recevoir le signal d'émetteur de compensation (S31) superposé au signal reçu (S22), dans lequel le récepteur (D) est configuré pour émettre un signal de sortie de récepteur (S0) et pour fournir le signal de sortie de récepteur (S0) à une unité de traitement (LF);
- une unité de traitement (LF) pour poursuivre le traitement du signal de sortie du récepteur afin de former un signal de sortie du récepteur traité davantage, en ce que le signal de sortie du récepteur (S0) est multiplié par une paire respective d'ondelettes puis intégré, dans lequel des coefficients de Fourier ont été ainsi formés ;
- une mémoire pour mémoriser le signal de sortie de récepteur traité;
- une deuxième mémoire (ME2) pour mémoriser les coefficients de Fourier ;
- une mémoire de référence (MRef) pour mémoriser des coefficients de Fourier de référence générés lors d'un étalonnage ;
- un estimateur pour effectuer une formation de quotient en divisant les coefficients de Fourier par les coefficients de Fourier de référence associés et en formant des coefficients de Fourier de réflexion d'objet qui permettent de faire une déclaration sur la propriété de l'objet ou la distance à l'objet ;
- une unité de transformation inverse pour multiplier les coefficients de Fourier par le facteur -1 et avec des ondelettes respectives,
- dans lequel l'unité de transformation inverse comprend un sommateur pour générer le signal d'alimentation de compensation (S3) en additionnant les signaux multipliés pour former le signal d'alimentation de compensation (S3),
- dans lequel l'unité de transformation inverse est configurée pour fournir le signal d'alimentation de compensation (S3) à l'émetteur de compensation (K) .

2. Système de capteur optique selon la revendication 1, **caractérisé en ce que** l'estimateur est agencé pour convertir ultérieurement les coefficients de Fourier de réflexion de l'objet formé en un signal d'information d'écho temporel (EInf) par une transformation de Fourier inverse dans un dispositif IFFT.

3. Système de capteur optique selon la revendication 2, **caractérisé en ce que** l'estimateur est agencé pour reconnaître un écho d'une réflexion sur l'objet à partir du signal d'information d'écho (EInf) lorsqu'un niveau absolu ou relatif prédéterminé est dépassé, de préférence à un point dans le temps prédéterminé.

4. Système de capteur optique selon une des revendications précédentes, **caractérisé en ce que** les ondelettes d'une paire ont la même fréquence.

5. Système de capteur optique selon une des revendications précédentes, **caractérisé en ce que** les coefficients de Fourier de réflexion sur l'objet forment les coefficients de Fourier d'une réflexion sur l'objet.

6. Système de capteur optique selon une des revendications précédentes, **caractérisé en ce que** l'estimateur est conçu pour reconnaître une réflexion sur l'objet à partir du coefficient de Fourier de réflexion de l'objet en utilisant un réseau de neurones, un reconnaisseur HMM (Modèle de Markov Caché), un reconnaisseur DTW (déformation temporelle dynamique), un décodeur de Viterbi ou des réseaux de Petri.

7. Système de capteur optique selon une des revendications précédentes, **caractérisé en ce que** l'estimateur est agencé pour reconnaître une réflexion sur l'objet à partir des coefficients de Fourier de réflexion de l'objet en recherchant le maximum.

8. Système de capteur optique selon une des revendications précédentes, **caractérisé en ce que** le générateur d'ondelettes est agencé pour générer une pluralité de paires d'ondelettes, dans lequel les paires d'ondelettes ont des fréquences différentes et les fréquences sont de préférence des multiples non entiers d'une fréquence fondamentale.

9. Système de capteur optique selon une des revendications précédentes, **caractérisé en ce que** l'unité de traitement est agencée pour former les coefficients de Fourier individuels au moyen d'une ondelette chacune d'une paire d'ondelettes.

10. Système de capteur optique selon une des revendications précédentes, **caractérisé en ce que** le générateur d'ondelettes est configuré pour générer plusieurs paires d'ondelettes, dans lequel les paires d'ondelettes individuelles ne sont pas orthogonales aux autres paires d'ondelettes.

11. Système de capteur optique selon une des revendications précédentes, **caractérisé en ce que** l'émetteur est alimenté par un signal d'émission qui est formé par la somme des paires d'ondelettes générées dans le générateur d'ondelettes (WG).

12. Système de capteur optique selon une des revendications précédentes, **caractérisé par** un commutateur de sélection (SW) pour alimenter un émetteur de référence (R) avec le signal d'alimentation au choix dans l'émetteur ou lors d'un étalonnage ; et
**caractérisé en ce que**

- l'émetteur de référence (R) lors de l'étalonnage est alimenté avec le signal d'alimentation (S5); et
- les coefficients de Fourier de référence sont générés dans l'unité de traitement (LF) lorsque le commutateur de sélection (SW) est commuté de telle manière que les ondelettes de l'unité de génération de signal soient transmises à l'émetteur de référence (R) et celui-ci transmet un signal de transmission directement au récepteur (D) .

13. Système de capteur optique selon une des revendications 2 à 12, **caractérisé en ce que** l'estimateur est conçu pour produire ou traiter ultérieurement un signal de temps d'écho (écho(t)) en tant que signal d'information d'écho (EInf) afin de déterminer la distance à un objet (O) de celui-ci ou pour indiquer la présence d'autres objets (O) à fermer, dont la distance n'est pas déterminée.

Fig. 1

Fig. 2

$\sum 1$

KRT

$\sum 2$

SRT

$S_{ij}(t)$

$S_{ij}(t)$

$F_{i,3}(t)$

$M3_{ij}$

S5

S3

WG

$YI_{i,j}(t)$

$YI_{i,j}(t)$

LF

$S_{ij}(t)$

S0(t)

D

S32

I3

S31

S22(t)

I2

O1

O2

S3_a

a

K

I1

S21

H

S5_a

d

a)

$S(f)$  $S_{-1}$  $S_0$  $S_1$  $S_2$  $S_3$

$-f_0$  $0$  $f_0$  $2*f_0$  $3*f_0$  $f$

b)

$A(f)$  $A_1$

$f_0$  $f$

c)

$S_1(f) < A(f)*S(f) >= S_1(f)$

$S_1$

$f_0$  $f$

Fig. 3

Fig. 4

Fig. 5

EP 3 690 488 B1

Fig. 6

Fig. 7

Fig. 8

EP 3 690 488 B1

Fig. 9

Fig. 10

Fig. 11

EP 3 690 488 B1

Fig. 12

Fig. 13

Fig. 14

Fig. 15

Fig. 16

Fig. 17

Fig. 18

Fig. 19

EP 3 690 488 B1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012024597
- DE 102013013664
- WO 2013124018 A
- DE 10001955 A1
- DE 10024156 A1
- DE 19839730 C1
- DE 930983 U1
- DE 10001943 C1

- DE 10346741 B3
- DE 102004025345 B3
- DE 102005013325 A1
- DE 102005010745 B3
- DE 102007005187 B4
- EP 2679982 A1
- EP 2631674 A1
- DE 10001943 C2

**In der Beschreibung aufgeführte Nicht-Patentliteratur**

- **STEPHANE MALLAT.** A Wavelet Tour of Signal Processing. Academic Press, 1997